Europäisches Patentamt

European Patent Office

Office européen des brevets

(19)

(11) **EP 0 605 289 B1**

(12) **FASCICULE DE BREVET EUROPEEN**

(45) Date de publication et mention
de la délivrance du brevet:
**21.11.2001 Bulletin 2001/47**

(51) Int Cl.[7]: **H04L 9/32**, G07F 7/10

(21) Numéro de dépôt: **93403117.0**

(22) Date de dépôt: **21.12.1993**

(54) **Procédé et dispositif pour l'authentification utilisant un portocole à connaissance nulle**

Verfahren und Vorrichtung zur Authentifizierung unter Verwendung eines Null-Kenntnis-Protokolls

Method and apparatus for authentication using a zero knowledge protocol

(84) Etats contractants désignés:
**DE ES FR GB IT PT**

(30) Priorité: **30.12.1992 FR 9215915**

(43) Date de publication de la demande:
**06.07.1994 Bulletin 1994/27**

(73) Titulaire: **Stern, Jacques**
**F-75013 Paris (FR)**

(72) Inventeur: **Stern, Jacques**
**F-75013 Paris (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**US-A- 4 932 056**

- **ADVANCES IN CRYPTOLOGY - PROCEEDINGS OF CRYPTO 91 Santa Barbara, 11-15 August 1991, BERLIN (DE)**
- **JEFFREY S. LEON: 'A Probabilistic Algorithm for Computing Minimum Weights of Large Error-Correcting Codes' IEEE TRANSACTIONS ON INFORMATION THEORY vol. 34, no. 5, pages 1354 - 1359**
- **JACQUES STERN: 'A method for finding codewords of small weight' CODING THEORY & APPLICATIONS, LECTURE NOTES IN COMPUTER SCIENCE vol. 388, pages 106 - 113**

**EP 0 605 289 B1**

**Description**

La présente invention a pour objet un procédé d'authentification d'au moins un dispositif d'identification par un dispositif de vérification, cette authentification étant réalisée par un protocole à apport nul de connaissance basé sur le problème du décodage par syndrome.

La présente invention a aussi pour objet des dispositifs d'identification et de vérification pour la mise en oeuvre dudit procédé. La présente invention s'applique, plus particulièrement, au cas des communications dites sécurisées où deux dispositifs échangent des données à travers un canal dont la sécurité est suspecte. Dans ce cas, il est essentiel d'avoir un moyen de reconnaissance mutuelle, à savoir un moyen permettant à un dispositif de vérification d'authentifier un utilisateur et de lui permettre l'accès aux données ou aux services. Il existe de nombreux exemples nécessitant la mise en oeuvre de ce type de communication sécurisée. On peut citer, notamment, le cas des ordinateurs de type bancaire permettant d'effectuer des transferts d'ordres. Dans ce cas, les deux ordinateurs doivent avoir la certitude qu'ils sont bien en communication l'un avec l'autre et non pas avec une entité pirate. On peut citer aussi le cas des distributeurs automatiques de billets, des décodeurs de télévision à péage, des publiphones. Dans ces exemples, le dispositif d'identification est constitué par un appareil portable tel qu'une carte à puce ou une clé électronique et le dispositif de vérification inclus soit dans le distributeur ou le décodeur doit contrôler la validité des différents moyens d'accès de la carte à puce ou de la clé électronique.

Dans ce contexte, on utilise fréquemment des méthodes d'authentification qui sont basées sur des techniques cryptographiques à clés secrètes. Ces méthodes sont, jusqu'à ce jour, les plus simples à mettre en oeuvre. Dans le cadre de ces méthodes, le dispositif d'identification par exemple les cartes à puces et le dispositif de vérification tel qu'un terminal, un lecteur de cartes, un décodeur, un publiphone, partagent la même clé secrète et l'identification est accomplie par un algorithme symétrique ou une fonction à sens unique. L'inconvénient de ces méthodes réside dans le fait que les deux parties, à savoir le dispositif de vérification et le dispositif d'identification, doivent coopérer mutuellement et secrètement. Cette condition n'est pas toujours vérifiée. Effet, un élément pirate peut acheter le dispositif de vérification et l'analyser pour connaître sa structure interne. Sur la base de cette analyse, l'élément pirate est techniquement capable de réaliser des dispositifs d'identification performants, car les mêmes clés secrètes sont présentes aux deux extrémités du réseau, à savoir dans le dispositif de vérification et dans le dispositif d'identification.

Il est reconnu que, parmi les divers procédés pouvant être implémentés pour se prémunir contre les inconvénients des méthodes classiques connues, les protocoles à apport nul de connaissance assurent jusqu'à maintenant le degré de sécurité le plus élevé.

En résumé, les protocoles d'identification à apport nul de connaissance sont fonctionnellement caractérisés par le fait qu'un nombre illimité d'interactions avec le dispositif d'identification et une analyse complète de la structure du dispositif de vérification ne sont pas suffisants pour pouvoir reconstruire les dispositifs d'identification.

Toutefois, les protocoles à apport nul de connaissance qui constituent une solution idéale au problème de l'identification présentent un inconvénient majeur. Leur réalisation est quelque peu difficile à faire électroniquement, car ellle demande un nombre d'opérations très important. On pourra trouver une description des procédés d'identification à apport nul de connaissance existant notamment, dans le brevet américain A-4 748 668 au nom de FIAT et al. ou dans la demande de brevet européenne A-0 311 470 au nom de GUILLOU et AL.

Des efforts ont été accomplis récemment afin de développer des méthodes d'identification dont la réalisation électronique soit plus facile. Une telle méthode est décrite notament dans le brevet américain US-A-4 932 056 au nom de SHAMIR. Cette méthode est connue sous le nom de méthode PKP. Toutefois, cette méthode, qui est plus facile à réaliser électroniquement que les algorithmes manipulant les grands nombres, présente l'inconvénient d'être relativement lente lors des échanges entre les dispositifs de vérification et d'identification.

La présente invention a donc pour but de remédier aux inconvénients mentionnés ci-dessus en proposant un nouveau procédé d'authentification qui soit facilement réalisable électroniquement et qui permette une authentification rapide du dispositif d'identification par le dispositif de vérification.

En conséquence, la présente invention a pour objet un procédé d'authentification d'au moins un dispositif d'identification par un dispositif de vérification, cette authentification étant réalisée par un protocole à apport nul de connaissance basé sur le problème du décodage par syndrome ou le problème connu sous le nom de "Modular Knapsack" , le procédé étant caractérisé par les étapes suivantes :

- pour permettre le dialogue entre le dispositif d'identification et le dispositif de vérification, établir une clé secrète constituée par au moins un vecteur $s_i$ de dimension n et de poids de Hamming d (d < n) et une clé publique comprenant une matrice M de dimensions n x k dont les coefficients sont choisis aléatoirement et au moins un vecteur $K_i$ tels que $K_i = Ms_i$ ;
- au niveau du dispositif d'identification, produire un vecteur aléatoire y de dimension n et une permutation aléatoire p et envoyer au dispositif de vérification un engagement obtenu en appliquant une fonction de hachage cryptographique H sur des paramètres fonction de y, p, s et M ;

2

- puis, en fonction d'un nombre aléatoire tiré par le dispositif de vérification et envoyé au dispositif d'identification, révéler au dispositif d'identification, certains éléments fonction de y, p et $s_i$ sans révéler $s_i$ ;
- et en fonction du nombre aléatoire, tester au niveau du dispositif de vérification à l'aide des éléments reçus et de la clé publique que les engagements sont corrects ;
- répéter les opérations précédentes un nombre de fois fonction du niveau de sécurité souhaité sachant que ce niveau de sécurité est exponentiellement croissant avec le nombre de tours.

Dans le procédé d'authentification ci-dessus, on utilise une matrice M de dimensions n x k, cette matrice étant commune à tous les utilisateurs et construite aléatoirement. Chaque utilisateur reçoit une clé secrète s qui est un mot de n bits avec un nombre d prescrit de 1. Dans ce cas, le système calcule la clé publique K telle que K = MS.

Alternativement, un utilisateur peut être doté de plusieurs clés secrètes s[1], ..., s[w] auxquelles sont associées des clés publiques K[i] = Ms[i]. Avantageusement, on peut exiger que ces vecteurs s[1], ..., s[w] forment un code simplexe étendu.

Le procédé d'identification est basé principalement sur la notion technique d'engagement. Si U est une séquence d'éléments binaires, un engagement pour U est l'image de U à travers une certaine fonction de hachage cryptographique. L'engagement sera utilisé comme une fonction à sens unique.

Selon un premier mode de réalisation du procédé d'authentification, dans une première étape

- a) commune aux différents procédés, le dispositif d'identification révèle son identité et/ou sa ou ses clés signées au dispositif de vérification qui vérifie que l'identité en question correspond bien au vecteur $K_i$, puis après avoir choisi un vecteur aléatoire y et une permutation aléatoire p,
- b) le dispositif d'identification calcule :
  $h_1 = H(p,My)$, $h_2 = H(y_p)$, $h_3 = H (y \text{ xor } s)p)$ et expédie l'engagement {$h_1$, $h_2$, $h_3$} au dispositif de vérification, (xp représentant le vecteur x permuté par p et xor la fonction Ou exclusif),
- c) puis le dispositif de vérification tire de façon aléatoire un nombre 0 < q < 4 et l'expédie au dispositif d'identification,
- d) alors le dispositif d'identification calcule et envoie au dispositif de vérification une réponse r définie par :

  Si q = 1 alors r = {y,p}
  Si q = 2 alors r = {y xor s, p}
  Si q = 3 alors r = {$y_p$, $s_p$}

- e) le dispositif de vérification reçoit r = {U,V} et teste que :

  Si q = 1 alors $h_1 = H (V,MU)$ et $h_2 = H(U_V)$
  Si q = 2 alors $h_1 = H(V, (MU) \text{ xor } K)$ et $h_3 = H(U_V)$
  Si q = 3 alors $h_2 = H(U)$, $h_3 = H(U \text{ xor } V)$ et le poids de Hamming de V est d,

  - f) si le test correspondant à q s'est avéré correct, le dispositif de vérification considère que le protocole s'est terminé par un succès.

Selon un autre mode de réalisation de la présente invention, où le vecteur s est remplacé par une collection de w vecteurs s[1], s[2], ..., s[w] formant un code simplexe de poids d, après avoir choisi un vecteur aléatoire y et une permutation aléatoire p

- b) le dispositif d'identification calcule $h_1 = H(My, p)$, $h_2 = H(y_p, s[1]_p, ..., s[w]p)$ et expédie l'engagement {$h_1$, $h_2$} au dispositif de vérification, - c) le dispositif de vérification tire de façon aléatoire un vecteur binaire b[1], ..., b[w] et l'envoie au dispositif d'identification ;
- d) le dispositif d'identification calcule et envoie au dispositif de vérification une réponse z définie par :
  z = yp xor s[1]$_p$b[1] xor s[2]$_p$b[2] xor s[3]pb[3] ... xor s[w]$_p$b[w] ;
- e) le dispositif de vérification tire de façon aléatoire un bit q et l'envoie au dispositif d'identification,
- f) le dispositif d'identification envoie une réponse r définie par :

  Si q = 0 alors r = {$y_p$, s[1]$_p$, ..., s[w]$_p$}
  Si q = 1 alors r = {p} ;

- g) le dispositif de vérification reçoit une réponse r = {r[0], r[1], ..., r[w]} si q = 0 ou r = {r[0]} si q = 1 ;
- h) le dispositif de vérification teste que :

Si q = 0 alors $h_2$ = H(r),z = r[0] xor r[1]b[1] xor r[2]b[2] xor r[3]b[3] ... xor r[w]b[w] et {r[1], r[2], ..., r[w]} forme un code simplexe ;

Si q = 1 alors H(M(depermute(z, r[0])) xor (K[1]b[1] xor K[2]b[2] xor K[3]b[3] ... xor K[w]b[w]), r[0]) = $h_1$ où K[i] = Ms[i]

- i) si le test correspondant à q s'est avéré correct, le dispositif de vérification considère que le protocole s'est terminé par un succès.

D'autres avantages de la présente invention apparaîtront à la lecture de la description de différents modes de réalisation du procédé, cette description étant faite avec référence aux dessins ci-annexés dans lesquels :

- la figure 1 est un schéma expliquant un premier mode de mise en oeuvre du procédé d'authentification conforme à la présente invention ;
- la figure 2 est un schéma d'un second mode de réalisation du procédé conforme à la présente invention ;
- la figure 3 est un schéma sous forme de blocs d'un dispositif d'identification conforme à la présente invention ;
- la figure 4 est un schéma sous forme de blocs d'un dispositif de vérification conforme à la présente invention, et
- la figure 5 est un schéma électrique d'un exemple de réalisation d'un multiplicateur matrice/vecteur conforme à la présente invention.

La présente invention concerne donc un nouveau procédé d'authentification réalisé par un protocole à apport nul de connaissance. La sécurité du procédé est basée sur le problème du décodage par syndrome (DS) qui peut être explicité de la manière suivante : soit une matrice binaire M et un vecteur binaire K, il s'agit de trouver un vecteur binaire s de poids relativement fort ou relativement faible, tel que Ms = K. Par poids, on entend le nombre de bits à 1 dans le vecteur concerné. Le problème posé ci-dessus est en fait très difficile à résoudre par les moyens de calcul connus à ce jour, si les dimensions de la matrice M et le poids d'Hamming d de s sont choisis judicieusement. Les algorithmes connus pour résoudre le problème du décodage par syndrome tels que décrits, par exemple, dans l'article de J.S Leon "A probabilistic algorithm for computing minimum weights of large error-correcting codes" dans IEEE TIT, 34(5), pages 1354 à 1359 ou dans l'article J. Stern "A method for finding codewords of small weight" Coding Theory & Applications, notes de lecture en Computer Science 388 (1989), pages 106-113 ont un temps de calcul qui croît exponentiellement avec la taille des matrices en question.

Les moyens de calcul actuels ne permettent pas de calculer s si les dimensions de M sont aux environs de 500 par 250 et la valeur de d proche de 50. Toutefois, étant donné s (pris au hasard mais avec un certain poids), il est possible de calculer K.

Dans la présente invention, on utilise cette propriété à sens unique pour que l'appareil de verification qui connaît K puisse tester que le dispositif d'identification possède s sans que sa valeur soit révélée au cours de l'interaction.

Pour mettre en oeuvre le procédé d'authentification conforme à la présente invention, une autorité choisit et publie la matrice M constituée de coefficients $a_{ij}$ qui ont été choisis aléatoirement. En fait, pour éviter de mémoriser toute la matrice M, il est possible de générer chaque coefficient $a_{ij}$ par f(i,j) où f est une fonction pseudo-aléatoire publique quelconque.

L'autorité choisit aussi une collection de vecteurs binaires $s_i$, à savoir $s_1$, $s_2$, ..., $s_n$, dont le poids de Hamming d est relativement faible et les distribue aux divers dispositifs d'identification. Ainsi, le dispositif d'identification i reçoit $s_i$. D'autre part, on publie l'ensemble des clés publiques $K_i$ où $K_i$ = $Ms_i$.

Selon une variante de réalisation, l'autorité peut aussi apposer sa signature sur les $K_i$ de façon à constituer un système cryptographique fermé où une interaction avec l'autorité est nécessaire afin de valider les clés publiques créant ainsi un système basé sur l'identité du porteur de la clé secrète $s_i$.

On décrira maintenant deux modes de réalisation spécifiques du procédé de la présente invention.

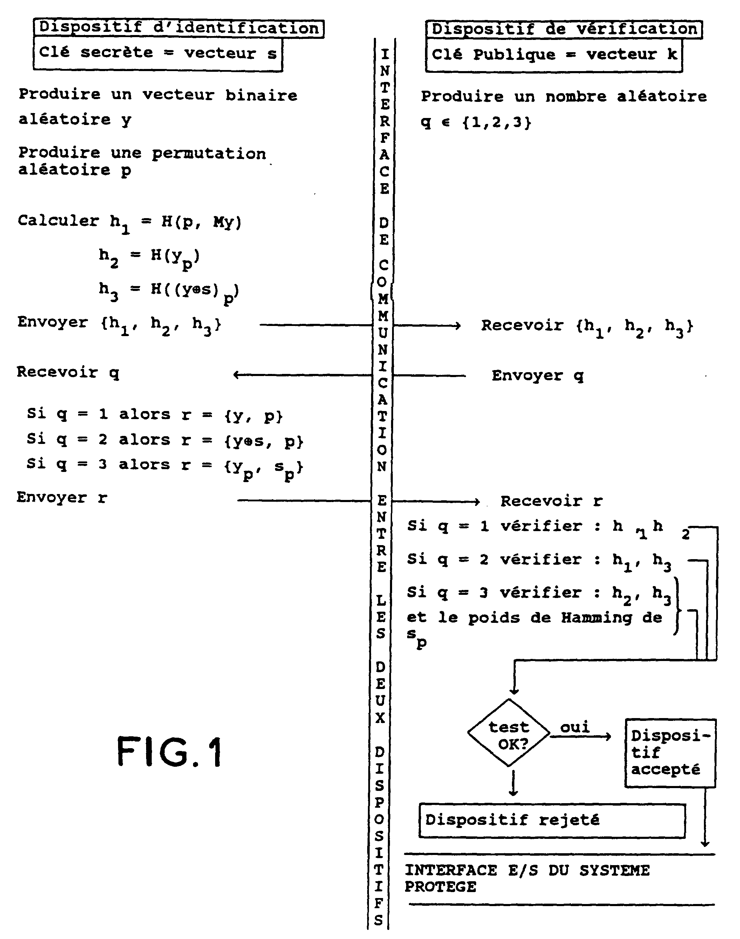

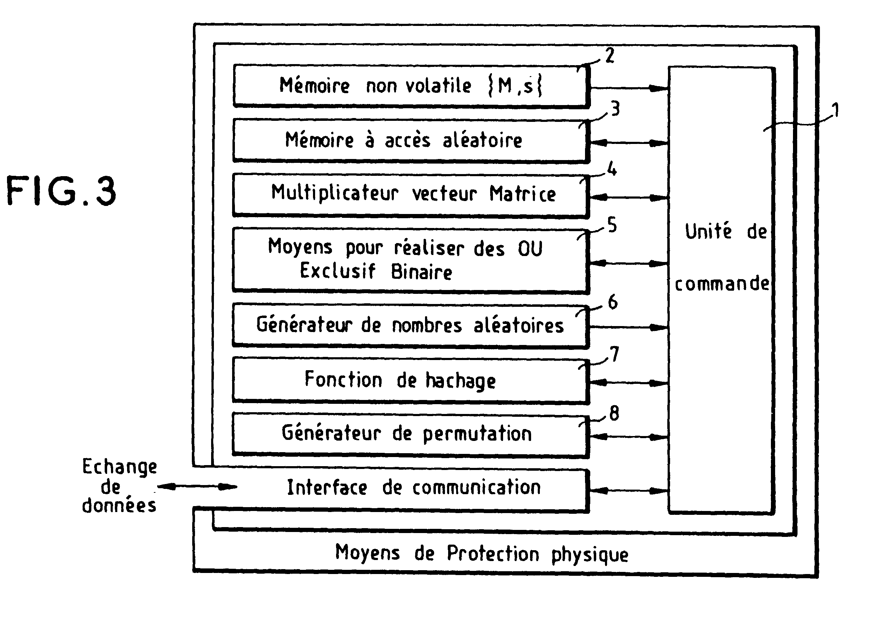

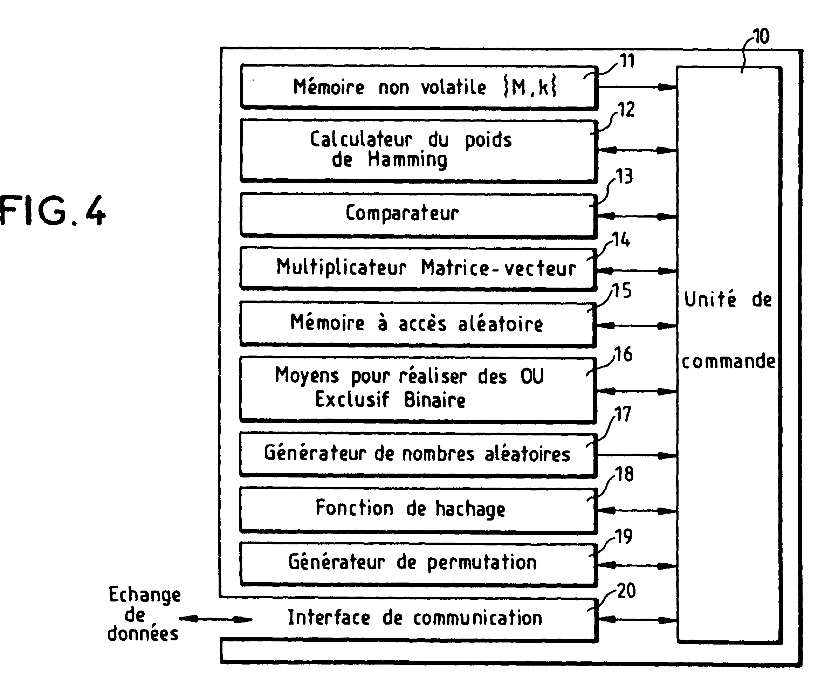

Le premier procédé sera décrit avec référence à la figure 1 qui représente schématiquement le protocole de communication mis en oeuvre entre un dispositif d'identification et le dispositif de vérification pour réaliser une authentification. Les dispositifs d'identification qui peuvent être constitués, par exemple, par des cartes à puce ou des clés électroniques doivent être physiquement inviolables. Ainsi, pour une carte à puce, il doit être impossible d'accéder à sa mémoire interne. Rien par contre n'est supposé concernant l'environnement dans lequel évolue le dispositif de vérification. De plus, comme représenté sur les figures 3 et 4 qui représentent schématiquement un dispositif d'identification et un dispositif de vérification, le dispositif d'identification comporte dans une mémoire non volatile sa clé secrète $s_i$ et la matrice M, de même le dispositif de vérification comporte dans une mémoire non volatile l'ensemble des clés publiques $K_i$ et la matrice M. Quand un dispositif d'identification veut entrer en contact avec un dispositif de vérification, les deux dispositifs exécutent le protocole suivant :

- a) tout d'abord le dispositif d'identification révèle son identité et/ou sa clé signée $K_i$ au dispositif de vérification qui vérifie que l'identité en question correspond bien à $K_i$.
- b) ensuite, le dispositif d'identification choisit un vecteur binaire aléatoire y et une permutation aléatoire p. Puis, il calcule les éléments suivants :

$h_1 = H(p,My)$, $h_2 = H(y_p)$, $h_3 = H((y\ xor\ s)_p)$ et expédie l'engagement $\{h_1, h_2, h_3\}$ au dispositif de vérification, ($x_p$ représentant le vecteur x permuté par p et xor la fonction Ou exclusif),

- c) puis le dispositif de vérification tire de façon aléatoire un nombre $0 < q < 4$ et l'expédie au dispositif d'identification,
- d) alors le dispositif d'identification calcule et envoie au dispositif de vérification une réponse r définie par :

Si $q = 1$ alors $r = \{y,p\}$
Si $q = 2$ alors $r = \{y\ xor\ s,\ p\}$
Si $q = 3$ alors $r = \{y_p,\ s_p\}$

- e) le dispositif de vérification reçoit $r = \{U,V\}$ et teste que :

Si $q = 1$ alors $h_1 = H(V,MU)$ et $h_2 = H(U_V)$
Si $q = 2$ alors $h_1 = H(V,\ (MU)\ xor\ K)$ et $h_3 = H(U_V)$
Si $q = 3$ alors $h_2 = H(U)$, $h_3 = H(U\ xor\ V)$ et le poids de Hamming de V est d,

- f) si le test correspondant à q s'est avéré correct, le dispositif de vérification considère que le protocole s'est terminé par un succès.

Si le test n'est pas correct, le dispositif d'identification est rejeté.

Lorsque le dispositif est accepté, on envoie une impulsion de commande sur l'interface entrée/sortie du système protégé qui permet la mise en route de la transaction ultérieure. L'ensemble des opérations ci-dessus est symbolisé sur la figure 1 dans laquelle la partie de gauche représente les différentes opérations réalisées au niveau du dispositif d'identification tandis que la partie de droite représente les différentes opérations réalisées au niveau du dispositif de vérification, les flèches symbolisant l'envoi d'informations d'un dispositif vers l'autre.

Pour accroître la sécurité du procédé, les deux dispositifs d'identification et de vérification répètent les étapes ci-dessus plusieurs fois, à savoir t fois, le dispositif de vérification n'authentifiant le dispositif d'identification que si toutes les sessions du protocole se sont soldées par un succès. De préférence, on choisit t tel que $0 < t < 60$.

Le procédé de base décrit ci-dessus peut être modifié de différentes manières, permettant notamment une simplification de la réalisation électronique ainsi qu'un raccourcissement des temps de calcul. Ainsi, il est possible de transmettre le vecteur My en clair et de redéfinir $H_1 = H(p)$ en modifiant les tests correspondants. Selon une autre variante, le dispositif de vérification et/ou le dispositif d'identification peuvent faire un test partiel sur un sous-ensemble de coordonnées des vecteurs et effectuer ainsi les calculs de façon plus rapide. Dans ce cas, certaines étapes du procédé sont modifiées telles que décrites ci-après.

Ainsi, l'étape b peut être modifiée de la façon suivante :

après avoir choisi un vecteur aléatoire y et une permutation aléatoire p,

- b) le dispositif d'identification calcule $h_1 = H(p)$, $h_2 = H(y_p)$, $h_3 = H((y\ xor\ s)_p)$ et expédie l'engagement $\{h_1, h_2, h_3\}$ au dispositif de vérification,
- c) le dispositif de vérification tire de façon aléatoire une liste de nombres mutuellement disjoints $G = \{g_1, ...g_f\}$ telle que $1 < g_i < k$ et l'envoie au dispositif d'identification,
- d) le dispositif d'identification calcule seulement les f bits de My dont les emplacements sont indiqués par G et expédie au dispositif de vérification le vecteur Z ainsi obtenu.

Dans ce cas, l'étape e est modifiée elle aussi de la façon suivante :

- e) le dispositif de vérification reçoit $r = \{U,V\}$ et contrôle que :

Si $q = 1$ alors $h_1 = H(V)$, $h_2 = H(U_V)$ et Extrait $(MU,G)\ xor\ Z = 0$ où Extrait $(x, G)$ représente le vecteur projection obtenu en choisissant dans x seulement les bits indiqués par G ;
Si $q = 2$ alors $h_1 = H(V)$, $h_3 = H(U_V)$ et Extrait $(MU\ xor\ K,G)\ xor\ Z=0$ ;
Si $q = 3$ alors $h_2 = H(U)$, $h_3 = H(U\ xor\ V)$ et le poids de Hamming de V est d.

Selon une autre variante du procédé, l'étape b peut être modifiée de la manière suivante :

- b) après avoir choisi un vecteur aléatoire y et une permutation aléatoire p, le dispositif d'identification calcule $h_1$ = H(p), $h_2$ = H($y_p$), $h_3$ = H ((y xor s)$_p$) et expédie l'engagement {$h_1$, $h_2$, $h_3$} au dispositif de vérification ;
- c) le dispositif d'identification calcule Q = My et expédie le vecteur Q ainsi obtenu au dispositif de vérification ;
- d) le dispositif de vérification tire de façon aléatoire une liste de nombres mutuellement disjoints G = {$g_1$, ..., $g_f$} telle que 1 < $g_i$ < k et calcule le vecteur Z = Extrait (Q,G).

Alors l'étape e est modifiée de la manière suivante :

- e) le dispositif de vérification reçoit r = {U,V} et contrôle que :

Si q = 1 alors $h_1$ = H(V), $h_2$ = H($U_V$) et Extrait (MU,G) xor Z = 0;
Si q = 2 alors $h_1$ = H(V), $h_3$ = H($U_V$) et Extrait (MU xor K,G) xor Z=0 ;
Si q = 3 alors $h_2$ = H(U), $h_3$ = H(U xor V) et le poids de Hamming de V est d.

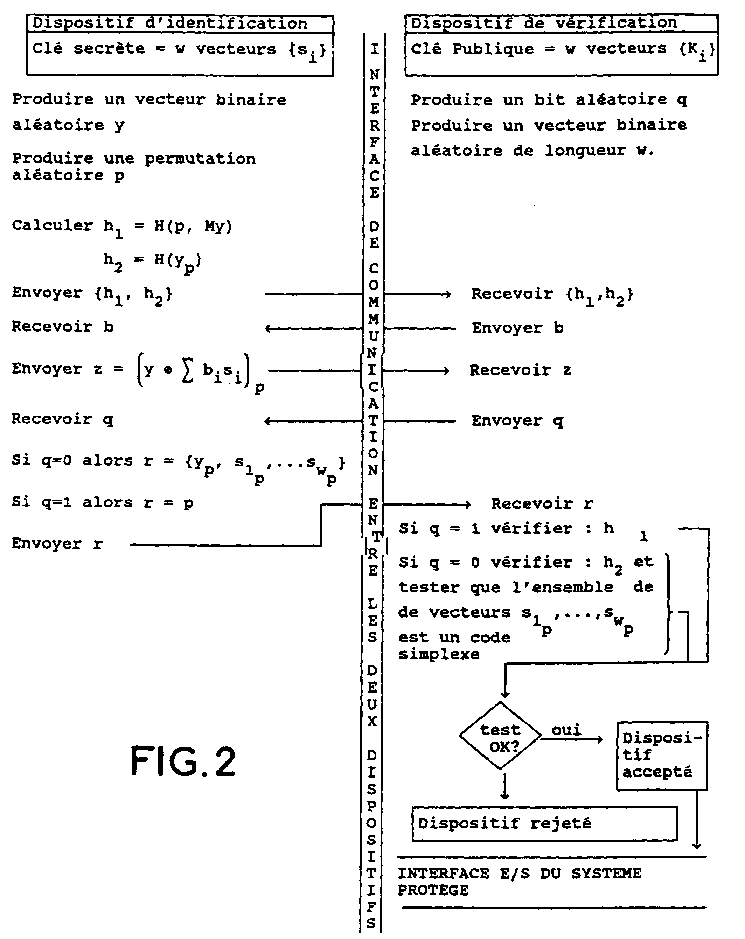

Un autre mode de mise en oeuvre du procédé d'authentification est maintenant décrit avec référence à la figure 2. Ce second mode de réalisation demande plus de calculs que le mode de réalisation précédent, mais la probabilité de succès d'une entité illégale décroît plus vite. Dans ce cas, le vecteur $s_i$ est remplacé par un ensemble de vecteurs s[1], ..., s[w] formant un code simplexe étendu. De plus le vecteur $K_i$ est remplacé par un ensemble de vecteurs K[1], ..., Kiwi tels que M(s[i]) = K[i].

Ce mode de réalisation comporte donc les étapes suivantes, symbolisées sur la figure 2 de manière identique à la symbolisation utilisée sur la figure 1 :

- a) le dispositif d'identification choisit un vecteur aléatoire y et une permutation aléatoire p puis calcule $h_1$ = H(My, p), $h_2$ = H(yp, s[1]$_p$, ..., s[w]$_p$) et expédie l'engagement {$h_1$, $h_2$} au dispositif de vérification,
- b) le dispositif de vérification tire de façon aléatoire un vecteur binaire b[1], ..., b[w] et l'envoie au dispositif d'identification ;
- c) le dispositif d'identification calcule et envoie au dispositif de vérification une réponse z définie par : z = yp xor s[1]$_p$b[1] xor s[2]$_p$b[2] xor s[3]$_p$b[3] ... xor s[w]$_p$b[w] ;
- d) le dispositif de vérification tire de façon aléatoire un bit q et l'envoie au dispositif d'identification,
- e) le dispositif d'identification envoie une réponse r définie par :

Si q = 0 alors r = {$y_p$, s[1]$_p$, ..., s[w]$_p$}
Si q = 1 alors r = {p} ;

- f) le dispositif de vérification reçoit une réponse r = {r[0], r[1], ..., r[w]} si q = 0 ou r = {r[0]} si q = 1 ;
- g) le dispositif de vérification teste que :

Si q = 0 alors $h_2$ = H(r),z = r[0] xor r[1]b[1] xor r[2]b[2] xor r[3]b[3] ... xor r[w]b[w] et {r[1], r[2], ..., r[w]} forme un code simplexe ;
Si q = 1 alors H(M(depermute(z, r[0]))) xor (K[1]b[1] xor K[2]b[2] xor K[3]b[3] ... xor K[w]b[w]), r[0]) = $h_1$ ;

- h) si le test correspondant à q s'est avéré correct, ce dispositif de vérification considère que le protocole s'est terminé par un succès.

Ce procédé peut lui aussi être modifié et adapté de manière à éviter la dépermutation du vecteur z, et à effectuer une vérification simplifiée sur un sous-ensemble des coordonnées des vecteurs comme décrit ci-dessus. Dans ce cas, le procédé peut comporter, par exemple, les étapes suivantes :

- a) le dispositif d'identification choisit un vecteur aléatoire y et une permutation aléatoire p, puis calcule : $h_1$ = H($_p$), $h_2$ = H($y_p$, s[1]$_{p'}$, s[w]$_p$) et expédie l'engagement {$h_1$, $h_2$} et le vecteur $h_0$ = My au dispositif de vérification ;
- b) le dispositif de vérification tire de façon aléatoire un vecteur binaire b[1], ..., b[w] et l'envoie au dispositif d'identification,
- c) le dispositif d'identification calcule et envoie au dispositif de vérification une réponse z définie par :
z = $y_p$ xor s[1]$_p$b[1] xor s[2]$_p$b[2] xor s[3]$_p$b[3] ... xor s[w]$_p$b[w] ;
- d) le dispositif de vérification tire de façon aléatoire un bit q et l'envoie au dispositif d'identification,
- e) le dispositif d'identification envoie une réponse r définie par :

Si q = 0 alors r = {$y_p$, s[1]$_p$, ..., s[w]$_p$}

Si q = 1 alors r = {p} ;

- f) le dispositif de vérification reçoit une réponse r = {r[0], r[1], ..., r[w]} si q = 0 ou r = {r[0]} si q = 1 ;
- g) le dispositif de vérification teste que :

Si q = 0 alors $h_2$ = H(r),z = r[0] xor r[1]b[1] xor r[2]b[2] xor r[3]b[3] ... xor r[w]b[w] et {r[1], r[2], ... r[w]} forme un code simplexe ;
Si q = 1 alors $h_1$ = H(r[0]) et $(h_0)_{r[0]}$ xor $(K[1]b[1]$ xor $K[2]b[2]$ xor $K[3]b[3]$ ... xor $K[w]b[w])_{r[O]}$ = z.

Si le test correspondant s'est avéré correct, le dispositif de vérification considère que le protocole s'est terminé par un succès.
Comme dans le cas du premier mode de réalisation, le protocole décrit ci-dessus peut être répété t fois, le dispositif de vérification n'authentifiant le dispositif d'identification que si toutes les sessions du protocole se sont soldées par un succès.
D'autre part, la sécurité des deux méthodes décrites ci-dessus dépend de la taille des différents paramètres, notamment de d, n, k, et t. Il est évident pour l'homme de l'art que le choix de t est facilement modulable en cours de fonctionnement, au niveau des deux dispositifs communiquant entre eux en fonction du contexte. En ce qui concerne les paramètres d, n et k , il s'agit de paramètres système et leurs choix sont fixés à l'origine et plus difficilement modifiables.
Ainsi, de préférence, les paramètres d, n, k sont choisis sensiblement sous la borne Warshamov-Gilbert donnant une valeur limite théorique pour le poids minimal d d'un code (n,k) aléatoire, à savoir : $d = nH_2(k/n)$ où $H_2(x)$ est la fonction d'entropie $H_2(x) = - x \log_2(x)-(1-x) \log_2(1 - x)$. Dans ce cas, d est choisi tel que :

$d = (k - n) \log_2 (1 - (k/n)) - k \log_2 (k/n)$
ou $d = (n - (k - n) \log_2 (1 - (k/n)) + k \log_2 (k/n)$.

De plus, à la restriction de la borne de Warshamov-Gilbert, il convient d'ajouter une relation telle que 2k = n qui lie les valeurs de n et k.
En utilisant les relations ci-dessus, de préférence d = 0,11 n ou d = 0,89 n et les couples n et k peuvent prendre l'une des valeurs suivantes :
{n = 384, k = 196} ou {n = 512, k = 256} ou {n = 1024, k = 512} ou {n = 768, k = 384).
Selon une variante de réalisation qui peut être utilisée dans l'ensemble des méthodes décrites ci-dessus, la fonction de hachage est remplacée par une fonction de chiffrement où le message à hacher joue le rôle de la clé et/ou de messages à chiffrer et où le contrôle de la véracité du message haché consiste à dévoiler le message qui a été haché et/ou la clé de chiffrement. On pourra se référer à ce sujet aux publications suivantes :

- Ivan Damgaard, Crypto'89, "Design principles for hash-functions" ;
- Naor and al. "one-way hash functions and their cryptographic applications", Proceedings of the 21st annual ACM symposium on theory of computing, Seattle, Washington, May 15-17, 1989, pp 33-43 ;
- Matyas, "Generating strong one-way functions with cryptographic algorithm", IBM Technical disclosure bulletin, vol. 27, N°10A, March 1985, pp.5658-5659.

Dans le cas d'un procédé basé sur le "Modular Knapsack", le choix du vecteur y et tous les calculs sont effectués modulo m et l'opération xor est remplacée par une addition ou une soustraction modulo m, les tests sur le poids étant remplacés par la vérification que toutes les coordonnées du vecteur sont soit 0, soit 1 et que le poids de ce vecteur est constant, la relation reliant n, k et m étant : $n \sim k \ln(m)/\ln 2$ et n - k >64. Alors m est choisi parmi les nombres 2, 3, 5, 7 ou $2^c$ dans lequel c est un nombre entier petit et les ensembles {n, k, m} peuvent prendre l'une des valeurs suivantes :
{196,128,3} ou {384,256,3} ou {128, 64, 5} ou {192, 96, 5}.
Dans beaucoup de cas, il est important d'avoir un moyen de déduire s de l'identité ID du porteur du dispositif d'identification. Ceci permet, par exemple, d'éviter la sauvegarde des clés publiques $K_i$ auprès des dispositifs de vérification et la mise à jour d'un dictionnaire de clés publiques dès qu'un nouvel utilisateur rejoint le système.
Pour ce faire, un code simplexe étendu $sigma_1$, ..., $sigma_u$ est choisi par l'autorité une fois pour toutes comme paramètre.
Pour enregistrer un utilisateur dont l'identité est ID, on hache la valeur ID par une fonction à sens unique publique (par exemple la fonction de hachage H) et on obtient un vecteur binaire $e_1$, ..., $e_u$. On calcule :

$$s_{ID} = \sum_{i=1}^{u} e_i \, sigma_i$$

On publie $K_1 = M(sigma_1)$, ..., $K_u = M(sigma)_u$ et on donne $s_{ID}$ à l'utilisateur ID.

Les dispositifs de vérifications peuvent calculer :

$$K_{ID} = \sum_{i=1}^{u} e_i K_i$$

où le vecteur $e_1$, ..., $e_u$ est donnée par le hachage de ID et vérifier que le dispositif d'identification possède $s_{ID}$.

Pour atteindre un degré de sécurité suffisant, il est indispensable d'avoir $u > 40$ ce qui implique, à priori, des codes simplexes de taille trop importante. En réalité, il est facilement possible de se ramener à des tailles raisonnables en choissant une collection de L codes simplexes de petites dimensions (par exemple d = 64, dim = 7, n = 580, k = 290, L = 8) et en calculant pour chaque utilisateur une collection de L clés secrètes $s[1]_{ID}$, $s[2]_{ID}$, ..., $s[L]_{ID}$ obtenues comme suit.

Choisir, une fois pour toutes L codes simplexes de dimension dim :

sigma $[1]_1$, ... sigma$[1]_{dim}$
sigma $[2]_1$, ... sigma$[2]_{dim}$
sigma $[L]_1$, ... sigma$[L]_{dim}$

donner, à chaque dispositif d'identification, la collection complète des clés publiques $K[i]_j = M (sigma [i]_j)$ pour i = 1, ...L et j = 1, ...dim.

Pour chaque utilisateur :

1. Calculer : $H(ID) = e_1, ...e_u$
2. Partager le vecteur e en L segments e[1], ... e[L] de dim bits chacun ;
3. Pour i = 1 à L calculer :

$$s[i]_{ID} = \sum_{j=1}^{dim} e[i]_j \, sigma[i]_j$$

4. Donner $s[1]_{ID}$, $s[2]_{ID}$, ..., $s[l]_{ID}$ à l'utilisateur.

On utilisera les divers $s[i]_{ID}$ soit de façon sérielle (en utilisant aux tours successifs les $s[i]_{ID}$ à tour de rôle) ou parallèle, comme l'illustre le protocole suivant :

a) le dispositif d'identification révèle son identité ID au dispositif de vérification ;
b) le dispositif de vérification calcule $K[1]_{ID}$, $K[2]_{ID}$,...,$K[L]_{ID}$
c) le dispositif d'identification choisit L vecteurs y[1],...,y[L] et L permutations p[1], ..., p[L], calcule $h_1 = H(\{p[i]\}$, $\{My[i]\})$, $h_2 = H(\{y[i]_{p[i]}\})$, $h_3 = H (\{y[i] \text{ xor } S[i]_{p[i]}\})$ et expédie l'engagement $\{h_1, h_2, h_3\}$ au dispositif de vérification ;
d) le dispositif de vérification tire de façon aléatoire un nombre $0 < q < 4$ et l'expédie au dispositif d'identification ;
e) le dispositif d'identification calcule et expédie au dispositif de vérification une réponse r définie par :

Si q = 1 alors r = {{y[i]}, {p[i]}}
Si q = 2 alors r = {{y[i] xor s[i]}, {p[i]}}
Si q = 3 alors r = {{y[i]$_{p[i]}$}, {s[i]$_{p[i]}$}}

f) le dispositif de vérification reçoit r = {U, V} et teste que :

Si q = 1 alors $h_1$ = H ({V[i]}, {MU[i]}) et $h_2$ = H({U[i]$_{V[i]}$})
Si q = 2 alors $h_1$ = H ({V[i]}, ({MU[i]}) xor K[i]}) et $h_3$ = H({U[i]$_{V[i]}$})
Si q = 3 alors $h_2$ = H ({U[i]}, $h_3$ = H({U[i] xor V[i]}) et le poids des V[i] est d.

g) Si le test correspondant à q s'est avéré correct, le dispositif de vérification considère que le protocole s'est terminé par un succès ;
h) les deux dispositifs répètent les étapes a) à f) t fois.

En version parallèle, le protocole prend la forme suivante :

- a) l'identificateur révèle son identité ID au vérifieur
- b) le vérifieur calcule K[1]$_{ID}$,K[2]$_{ID}$,..., K[L]$_{ID}$
- c) l'identifieur choisit L vecteurs y[1], ..., y[L] et L permutations p[1], ..., p[L], calcule $h_1$ = {H(p[i], My[i])}, $h_2$ = {H(y[i]$_{p[i]}$)}, $h_3$ = {H((y[i] xor s[i]$_{p[i]}$)} et expédie l'engagement {$h_1$, $h_2$, $h_3$} au vérifieur.
- d) le vérifieur tire de façon aléatoire L nombres aléatoires q[1], ..., q[L] où 0 < q(i) < 4 et les expédie à l'identifieur
- e) l'identifieur calcule et expédie au vérifieur L réponses r[1], ..., r[L] définies par :

  si q[i] = 1 alors r[i] = {y[i], p[i]}
  si q[i] = 2 alors r[i] = {y[i] xor s(i), p[i]}
  si q[i] = 3 alors r[i] = {y[i]$_{p[i]}$ s(i]$_{p[i]}$}

- f) le vérifieur reçoit les {r[i]} et contrôle les engagements d'une façon évidente pour l'homme de l'art.

Une autre méthode pour relier ID à s est la suivante :

- on introduit t secrets de poids at dont les bits à un sont répartis sur 2at positions. Soit s[1], s[2], ..., s[t] et on publie Ms[i] pour i = 1, ...,t.

Dans ce cas, la génération d'une clé se passe selon le processus suivant. Il est aisé, notamment par tiangulation partielle, de trouver un mot s tel que :

$$s = \sum_{i=1}^{t} x[i]\, s[i]$$

et

$$Ms = \sum_{i=1}^{t} e_i Ms[i]$$

et

le poids de s est approximativement ta-t/2.

Le choix des dimensions dans ce système est régi typiquement par les relations suivantes : 0,11 n = ta - t/2, 2k = n et 2atδ > 56 où 2a-2a $H_2(\delta) \sim 1$.

Typiquement, pour t = 56 on a : d = 95, n = 863, k = 432. Il est évident pour l'homme de l'art que d'autres combinaisons sont possibles.

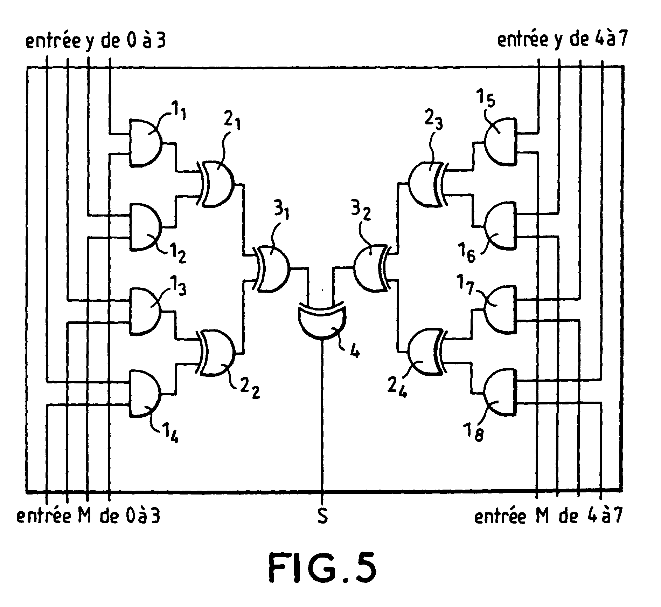

On décrira maintenant succinctement, avec référence à la figure 3, un mode de réalisation schématique d'un dispositif d'identification qui peut être, par exemple, une carte à puce. Ce dispositif d'identification comporte donc une unité de commande 1, une mémoire non volatile 2 qui peut être seulement lue et qui contient par exemple la matrice M ou une fonction permettant d'obtenir les coefficients de la matrice M tels que définis ci-dessus ainsi que la clé secrète $s_i$ du dispositif d'identification lui-même. Il comporte aussi une mémoire à accès aléatoire 3, un multiplicateur vecteur-matrice dont le mode de réalisation sera décrit avec référence à la figure 5, un moyen pour réaliser des OU exclusifs binaires 5, un générateur 6 de nombres aléatoires, une fonction de hachage 7 et un générateur de permutation 8, tous ces éléments étant protégés physiquement. Il comporte aussi un interface de communication permettant un échange de données entre le dispositif de vérification et l'unité de commande du dispositif d'identification. Le générateur de nombres aléatoires peut être réalisé par une source de bruit blanc numérisé qui peut être produit, par exemple, par une diode zener polarisée en inverse dans la zone dite "du coude"ou peut être aussi constitué par un générateur de nombres pseudo-aléatoires comme décrit dans les brevets américains 4 817 145 au nom de GUNTER ou 4 649 419 au nom d'ARAGON. D'autre part, le générateur de permutation 8 est capable de permuter des vecteurs binaires en utilisant, par exemple, la méthode décrite dans l'article intitulé "On the generation of permutation" de David Naccache dans le South African Computer Journal, n°2, 1990, pages 12 à 16.

La fonction de hachage peut être réalisée par une fonction de hachage MD4 présentée par RIVEST à crypto 90, FFT-Hash II itérée convenablement, présentée par SCHNOR à Eurocrypt 92, ou par l'algorithme de chiffrement DES.

Le dispositif de vérification tel que représenté à la figure 4 comporte lui aussi une unité de commande 10, cette unité de commande 10 étant reliée à une mémoire non volatile 11 du type ROM qui comporte la matrice M et la clé publique K, un calculateur du poids de Hamming 12, un comparateur 13, un multiplicateur matrice-vecteur 14, une mémoire à accès aléatoire 15, des moyens 16 pour réaliser des OU exclusifs binaires identiques aux moyens 5 du dispositif d'identification, un générateur 17 de nombres aléatoires, tel que décrit ci-dessus, une fonction de hachage 18 identique à la fonction de hachage 7 et un générateur de permutations 19. Il comporte aussi une interface de communication 20 reliée à l'unité de commande 10 et permettant de gérer la communication entre le dispositif de vérification et les différents dispositifs d'identification.

On décrira maintenant avec référence à la figure 5, un mode de réalisation de la fonction multiplication de la matrice par un vecteur. Ce mode de réalisation simplifié peut être utilisé avec un vecteur y de huit bits. Comme représenté sur la figure 5 concernant un multiplicateur matriciel M permettant de multiplier un vecteur y de huit bits par la matrice de dimensions correspondantes, ce multiplicateur est formé de huit portes-ET $1_1$, $1_2$, $1_3$, $1_4$, $1_5$, $1_6$, $1_7$, $1_8$. Chaque porte-ET reçoit sur chaque entrée, un bit du vecteur y et un bit de la ligne courante de la matrice M. Les sorties des porte-ET alimentent un réseau triangulaire de porte OU exclusifs $2_1$, $2_2$, $2_3$, $2_4$, $3_1$, $3_2$, 4 afin d'obtenir à la sortie du circuit le bit correspondant au produit scalaire de y par la ligne courante de la matrice M. De manière plus spécifique, les sorties des portes $1_1$, $1_2$ sont envoyées en entrée de la porte OU exclusif $2_1$, les sorties des portes $1_3$, $1_4$ sont envoyées en entrée de la porte OU exclusif $2_2$ et les sorties de ces deux portes OU exclusif sont envoyées en entrée de la porte OU exclusif $3_1$. De manière identique, les sorties des portes $1_5$, $1_6$ sont envoyées en entrée de la porte OU exclusif $2_3$ et les sorties des portes $1_7$, $1_8$ sont envoyées en entrée de la porte OU exclusif $2_4$, les sorties de ces deux portes OU exclusif étant envoyées en entrée de la porte OU exclusif $3_2$. Les sorties des portes OU exclusif $3_1$, $3_2$ sont envoyées en entrée de la porte OU exclusif 4 dont la sortie S correspond au produit scalaire de y par la ligne courante de la matrice M.

## Revendications

1.  Procédé d'authentification d'au moins un dispositif d'identification par un dispositif de vérification, cette authentification étant réalisée par un protocole à apport nul de connaissance, **caractérisé en ce que** le protocole à apport nul de connaissance est basé sur le problème du décodage par syndrome ou le problème connu sous le nom de « Modular Knapsack », et comporte les étapes suivantes :

    -   pour permettre le dialogue entre le dispositif d'identification et le dispositif de vérification, établir une clé secrète constituée par au moins un vecteur $s_i$ de dimension n et de poids de Hamming d tel que d < n et une clé publique comprenant une matrice M de dimensions n x k dont les coefficients sont choisis aléatoirement et au moins un vecteur $K_i$ tels que $K_i = MS_i$ ;
    -   au niveau du dispositif d'identification, produire un vecteur aléatoire y de dimension n et une permutation aléatoire p et envoyer au dispositif de vérification un engagement obtenu en appliquant une fonction de hachage cryptographique H sur des paramètres fonction de y, p, s et M ;
    -   puis, en fonction d'un nombre aléatoire tiré par le dispositif de vérification et envoyé au dispositif d'identification, révéler au dispositif d'identification, certains éléments fonction de y, p. et $s_i$ sans révéler $s_i$ ;
    -   et en fonction du nombre aléatoire, tester au niveau du dispositif de vérification à l'aide des éléments reçus et de la clé publique que les engagements sont corrects ;
    -   répéter les opérations un nombre de fois fonction du niveau de sécurité souhaité.

2.  Procédé selon la revendication 1, **caractérisé en ce que** le vecteur $s_i$ est un vecteur binaire.

**3.** Procédé selon les revendications 1 et 2, **caractérisé en ce que**. après avoir choisi un vecteur aléatoire y et une permutation aléatoire p, le dispositif d'identification calcule :

$h_1 = H(p,My)$, $h_2 = H(y_p)$, $h_3 = H((y \text{ xor } s)_p)$ et expédie l'engagement $\{h_1, h_2, h_3\}$ au dispositif de vérification, $x_p$ représentant le vecteur x permuté par p et xor la fonction Ou exclusif, puis le dispositif de vérification tire de façon aléatoire un nombre q tel que $0 < q < 4$ et l'expédie au dispositif d'identification, alors le dispositif d'identification calcule et envoie

au dispositif de vérification une réponse r définie par :

si q = 1 alors r = {y,p}
si q = 2 alors r = {y xor s, p}
si q = 3 alors r = {$y_p$,$s_p$}

le dispositif de vérification reçoit r = {U,V} et teste que :

si q = 1 alors $h_1 = H(V,MU)$ et $h_2 = H(U_v)$
si q = 2 alors $h_1 = H(V,MU \text{ xor } K)$ et $h_3 = H(U_v)$
si q = 3 alors $h_2 = H(U)$ et $h_3 = H(U \text{ xor } V)$ et le poids de Hamming de V est $d_{r'}$
si le test correspondant à q s'est avéré correct, le dispositif de vérification considère que le protocole s'est terminé par un succès.

**4.** Procédé selon les revendications 1 et 2, **caractérisé en ce que**, après avoir choisi un vecteur aléatoire y et une permutation aléatoire p, le dispositif d'identification calcule $h_1 = H(p)$, $h_2 = H(y_p)$, $h_3$, $H((y \text{ xor } s)_p)$ et expédie l'engagement $\{h_1,h_2,h_3\}$ à ce dispositif de vérification,

le dispositif de vérification tire de façon aléatoire une liste de nombres mutuellement disjoints $G = \{g_1, ...g_f\}$ telle que $1 < g_i < k$ et l'envoie au dispositif d'identification ;
le dispositif d'identification calcule seulement les f bits de My dont les emplacements sont indiqués par G et expédie au dispositif de vérification le vecteur Z ainsi obtenu ;
le dispositif de vérification tire de façon aléatoire un nombre q tel que $0 < q < 4$ et l'expédie au dispositif d'identification, alors le dispositif d'identification calcule et envoie au dispositif de vérification une réponse r définie par :

si q = 1 alors r = {y,p}
si q = 2 alors r = {y xor s, p)
si q = 3 alors r = {$y_p$,$s_p$} ;

le dispositif de vérification reçoit r = {U,V} et contrôle que :

si q = 1 alors $h_1 = H(V)$, $h_2 = H(U_V)$ et Extrait (MU,G) xor Z = 0 où Extrait (x, G) représente le vecteur projection obtenu en choisissant dans x seulement les bits indiqués par G ;
si q = 2 alors $h_1 = H(V)$, $h_3 = H(U_V)$ et Extrait (MU xor K,G) xor Z = 0 ;
si q = 3 alors $h_2 = H(U)$, $h_3 = H(U \text{ xor } V)$ et le poids de Hamming de V est d ;
si le test correspondant à q s'est avéré correct, le dispositif de vérification considère que le protocole s'est terminé par un succès.

**5.** Procédé selon les revendications 1 et 2, **caractérisé en ce que**, après avoir choisi un vecteur aléatoire y et une permutation aléatoire p, le dispositif d'identification calcule $h_1 = H(p)$, $h_2 = H(y_p)$, $h_3 = H((y \text{ xor } s)_p)$ et expédie l'engagement $\{h_1,h_2,h_3\}$ au dispositif de vérification,

le dispositif d'identification calcule Q = My et exépdie le vecteur Q ainsi obtenu au dispositif de vérification ;
le dispositif de vérification tire de façon aléatoire une liste de nombres mutuellement disjoints $G = \{g_1, ...,g_f\}$ telle que $1 < g_i < k$ et calcule le vecteur Z = Extrait (Q,G) ;
le dispositif de vérification tire de façon aléatoire un nombre q tel que $0 < q < 4$ et l'expédie au dispositif d'identification, alors le dispositif d'identification calcule et envoie au dispositif de vérification une réponse r définie par :

si q = 1 alors r = {y,p}
si q = 2 alors r = {y xor s, p}

si q = 3 alors r **=** $\{y_p, s_p\}$ ;

le dispositif de vérification reçoit r = {U,V} et contrôle que :

si q = 1 alors $h_1 = H(V)$, $h_2 = H(U_V)$ et Extrait (MU,G) xor 2 = 0 ;
si q = 2 alors $h_1 = H(V)$, $h_3 = H(U_V)$ et Extrait (MU xor K,G) xor Z = 0 ;
si q = 3 alors $h_2 = H(U)$, $h_3 = H(U$ xor $V)$ et le poids de Hamming de V est d ;

Si le test correspondant à q s'est avéré correct, le dispositif de vérification considère que le protocole s'est terminé par un succès.

6. Procédé selon la revendication 1, **caractérisé en ce que** le vecteur $s_i$ est remplacé par un ensemble de vecteurs s[1], ..., s[w] formant un code simplexe étendu.

7. Procédé selon la revendication 6, **caractérisé en ce que** le vecteur $K_i$ est remplacé par un ensemble de vecteurs K[1], ... K[W] tels que M(s[i]) = K[i].

8. Procédé selon les revendications 6 et 7, **caractérisé en ce que** le dispositif d'identification choisit un vecteur aléatoire y et une permutation aléatoire p puis calcule $h_1 = H(My, p)$, $h_2 = H(y_p, s[1]_p, ..., s[w]_p)$ et expédie l'engagement $\{h_1, h_2\}$ au dispositif de vérification,

le dispositif de vérification tire de façon aléatoire un vecteur binaire b[1], ..., b[w] et l'envoie au dispositif d'identification ;
le dispositif d'identification calcule et envoie au dispositif de vérification une réponse z définie par :
$z = y_p$ xor $s[1]_p b[1]$ xor $s[2]_p b[2]$ xor $s[3]_p b3$ ... xor $s[w]_p b[w]$ ;
le dispositif de vérification tire de façon aléatoire un bit q et l'envoie au dispositif d'identification,
le dispositif d'identification envoie une réponse r définie par :

Si q = 0 alors r = $\{y_p, s[1]_p, ..., s[w]_p\}$
Si q = 1 alors r = {p} ;

le dispositif de vérification reçoit une réponse r = {r[0], r[1], ..., r[w]} si q = 0 ou r = {r[0]} si q = 1 ;
le dispositif de vérification teste que :

Si q = 0 alors $h_2 = H(r)$,z = r[0] xor r[1]b[1] xor r[2]b[2] xor r[3]b[3] ... xor r[w]b[w] et {r[1], r[2], ..., r[w]} forme un code simplexe ;
Si q = 1 alors H(M(depermute(z, r[0])) xor (K[1]b[1] xor K[2]b[2] xor K[3]b[3] ... xor K[w]b[w]), r[0]) = $h_1$ ;
si le test correspondant à q s'est avéré correct, le dispositif de vérification considère que le protocole s'est terminé par un succès.

9. Procédé selon les revendications 6 et 7, **caractérisé en ce que** le dispositif d'identification choisit un vecteur aléatoire y et une permutation aléatoire p, puis calcule :

$h_1 = H(p)$, $h_2 = H(y_p, s[1]_p, ..., s[w]_p)$ et expédie l'engagement $\{h_1, h_2\}$ et le vecteur $h_0 = My$ au dispositif de vérification ;
le dispositif de vérification tire de façon aléatoire un vecteur binaire b[1], ..., b[w] et l'envoie au dispositif d'identification,
le dispositif d'identification calcule et envoie au dispositif de vérification une réponse z définie par :
$z = y_p$ xor $s[1]_p b[1]$ xor $s[2]_p b[2]$ xor $s[3]_p b[3]$ ... xor $s[w]_p b[w]$ ;
le dispositif de vérification tire de façon aléatoire un bit q et l'envoie au dispositif d'identification,
le dispositif d'identification envoie une réponse r définie par :

Si q = 0 alors r = $\{y_p, s[1]_p, ..., s[w]_p\}$
Si q = 1 alors r = {p} ;

le dispositif de vérification reçoit une réponse r = {r[0], r[1], ..., r[w]} si q = 0 ou r = {r[0]} si q = 1 ;
le dispositif de vérification teste que :

Si q = 0 alors $h_2$ = H(r),z = r[0] xor r[1]b[1] xor r[2]b[2] xor r[3]b[3] ... xor r[w]b[w] et {r[1], r[2], ... r[w]} forme un code simplexe ;

Si q = 1 alors $h_1$ = H(r[0]) et $(h_0)_{r[0]}$ xor (K[1]b[1] xor K[2]b[2] xor K[3]b[3] ... xor K[w]b[w]$)_{r[0]}$ = z.

Si le test correspondant s'est avéré correct, le dispositif de vérification considère que le protocole s'est terminé par un succès.

**10.** Procédé selon l'une quelconque des revendications 1 à 9, **caractérisé en ce que** le protocole est répété t fois et que le dispositif de vérification n'authentifie le dispositif d'identification que si toutes les sessions du protocole se sont soldées par un succès.

**11.** Procédé selon la revendication 10, **caractérisé en ce que** t est choisi tel que 0<t<60.

**12.** Procédé selon l'une quelconque des revendications 1 à 11, **caractérisé en ce que** le poids de Hamming d est choisi tel que :
d = (k - n) $\log_2$ (1 - (k/n)) - k $\log_2$ (k/n), et de préférence sensiblement inférieur à cette valeur.

**13.** Procédé selon l'une quelconque des revendications 1 à 11, **caractérisé en ce que** le poids de Hamming d est choisi tel que :
d = (k - n) $\log_2$ (1 - (k/n)) - k $\log_2$ (k/n) et de préférence sensiblement supérieur à cette valeur.

**14.** Procédé selon l'une quelconque des revendications 12 et 13, **caractérisé en ce que** n = 2 k.

**15.** Procédé selon l'une quelconque des revendications 12 à 14, **caractérisé en ce que** d = 0,11n ou d = 0,89 n.

**16.** Procédé selon l'une quelconque des revendications 1 à 15, **caractérisé en ce que** n et k prennent comme valeur l'un des couples suivants :
{n = 384, k = 196} ou {n = 512, k = 256} ou {n = 1024, k = 512} ou {n =768, k = 384}.

**17.** Procédé selon l'une quelconque des revendications 1 à 16, **caractérisé en ce que** la fonction de hachage est remplacée par une fonction de chiffrement où le message à hâcher joue le rôle de la clé et/ou du message à chiffrer et où le contrôle de la véracité du message hâché consiste à dévoiler le message qui a été hâché et/ou la clé de chiffrement.

**18.** Procédé selon l'une quelconque des revendications 1 à 17, **caractérisé en ce qu'**il est basé sur le « Modular Knapsack » et **en ce que** le choix du vecteur y et tous les calculs sont effectués modulo m et l'opération xor est remplacée par une addition ou une soustraction modulo m, les tests sur le poids étant remplacés par la vérification que toutes les coordonnées du vecteur sont soit 0, soit 1 et que le poids de ce vecteur est constant, la relation reliant n, k et m étant :n $\cong$ k ln(m)/ln 2 et n - k < 64.

**19.** Procédé selon la revendication 18, **caractérisé en ce que** m est choisi parmi les nombres 2, 3, 5, 7 ou $2^c$ dans lequel c est un nombre entier petit.

**20.** Procédé selon les revendications 18 ou 19, **caractérisé en ce que** {n,k,m} prennent comme valeurs l'une des valeurs suivantes : {196, 128, 3} ou {384, 256, 3} ou {128, 64, 5} ou {192, 96, 5}.

**21.** Procédé selon l'une quelconque des revendications 1 à 20, **caractérisé en ce que** le calcul de H(p) est effectué en calculant H($e_p$) où e est un vecteur constant pseudo-aléatoire.

**22.** Procédé selon l'une quelconque des revendications 1 à 21, **caractérisé en ce que** pour pouvoir associer l'identité ID de chaque utilisateur à ses clés {$s_i$, $K_i$}, l'autorité génératrice choisit un ensemble de clés secrètes primaires {$KP_i$} et hâche ID en un vecteur binaire I = H<ID> servant à calculer $s_i$ comme fonction des $KP_i$ , l'autorité publiant l'ensemble des clés publiques primaires {$PP_i$} où {$PP_i$} = f ($KP_i$).

**23.** Procédé selon la revendication 22, **caractérisé en ce que** l'autorité utilise les bits de I comme indicateurs de sélection permettant de décider pour chaque $KP_i$ si celui-ci intervient dans le processus de calcul de s ou non.

**24.** Procédé selon la revendication 23, **caractérisé en ce que** l'ensemble {$KP_i$} forme un ou plusieurs codes simplexes étendus.

**25.** Procédé selon la revendication 24, **caractérisé en ce que** I est un nombre de 56 bits.

**26.** Procédé selon les revendications 22 à 25, **caractérisé en ce que** s est calculé comme combinaison linéaire des $KP_i$ soit

$$s = I [1] KP_1 + I [2] KP_2 + ... I [\text{taille de I}] K_p \text{ taille de I et où } PP_i = (KP_i).$$

**27.** Procédé pour relier ID à s selon les revendications 22, 23 et 25, **caractérisé en ce que** l'on réalise les calculs suivants :

- l'autorité sélectionne t secrets $KP_i$ de poids at dont les bits à un sont répartis sur 2at positions, publie l'ensemble des $PP_i = M(KP_i)$ et génére une clé s par triangulation partielle de la façon suivante :

$$s = \sum_{i=I}^{t} x[i] \, KP_i$$

$$Ms = \sum_{i=I}^{t} I[i] \, PP_i$$

et

le poids de s = ta-t/2,

le choix des dimensions étant régi par les relations suivantes : 0,11 n = ta-t/2, 2k = n et $2at\delta > 56$ où $2a-2aH2(\delta) \cong 1$.

**28.** Procédé selon la revendication 27, **caractérisé en ce que** t = 56, d = 95, n = 864, k = 432.

**29.** Dispositif d'identification pour la mise en oeuvre du procédé selon l'une quelconque des revendications 1 à 28, **caractérisé en ce qu'**il comporte au moins des moyens pour multiplier une matrice M de dimensions n x k, par des vecteurs de n bits, des moyens pour stocker un vecteur secret $s_j$ d'un poids de Hamming d, des moyens pour produire un vecteur aléatoire y et une permutation aléatoire p, des moyens pour réaliser un hachage cryptographique H et des moyens de communication avec le dispositif de vérification.

**30.** Dispositif de vérification pour la mise en oeuvre du procédé selon l'une quelconque des revendications 1 à 28, **caractérisé en ce qu'**il comporte au moins des moyens pour multiplier une matrice M de dimensions n x k, par des vecteurs de n bits, des moyens pour stocker au moins un vecteur public $K_i$ tels que $K_i = Ms_i$, des moyens pour produire aléatoirement un nombre entier, des moyens pour réaliser un hachage cryptographique H et des moyens de communication avec les dispositifs d'identification.

**31.** Dispositif selon les revendications 29 et 30, **caractérisé en ce que** la matrice M est générée par un générateur déterministe de nombres pseudo-aléatoires.

**32.** Dispositif selon les revendications 29 à 31, **caractérisé en ce que** le multiplieur matriciel M est formé d'un alignement de portes "et" aux entrées de chacune desquelles on applique un bit du vecteur y et un bit de la ligne courante de la matrice M et où les sorties des portes "et" alimentent un réseau triangulaire de portes "'xor" afin d'obtenir à la sortie du circuit le bit correspondant au produit scalaire de y par la ligne courante de la matrice M.

**Patentansprüche**

**1.** Verfahren zur Authentifizierung wenigstens einer Identifikationseinheit durch eine Verifikationseinheit, wobei diese Authentifizierung durch ein Nullkenntnis-Protokoll erfolgt,

**dadurch gekennzeichnet, daß**

das Nullkenntnis-Protokoll auf dem Problem der Dekodierung durch Syndrome oder dem Problem beruht, das unter dem Namen "Modular Knapsack" bekannt ist, und folgende Schritte enthält:

- zur Ermöglichung des Dialogs zwischen der Identifikationseinheit und der Verifikationseinheit wird ein Geheimschlüssel durch wenigstens einen Vektor $s_j$ mit der Abmessung n und dem Hamming-Gewicht d geschaffen, wobei d < n, und ein öffentlicher Schlüssel mit einer Matrix M mit den Abmessungen n x k gebildet, deren Koeffizienten zufallsbedingt ausgewählt werden, und wenigstens ein Vektor $K_j$ wie $K_j = Ms_j$ ist,
- bei der Identifikationseinheit wird ein Zufallsvektor y mit der Abmessung n und einer Zufallspermutation p erzeugt, und zu der Verifikationseinheit wird eine Festschreibung gesendet, die dadurch gewonnen wird, indem eine Verschlüsselungs-Kontrollfunktion H auf die Funktionsparameter von y, p, s und M angewendet wird,
- dann werden in Abhängigkeit von einer Zufallszahl, die durch die Verifikationseinheit gewählt und zu der Identifikaitonseinheit übertragen wird, der Identifikationseinheit bestimmte Funktionselemente von y, p und $s_j$ ohne $s_j$ mitgeteilt,
- und in Abhängigkeit von der Zufallszahl wird bei der Verifikationseinheit mittels der empfangenen Elemente und des öffentlichen Schlüssels geprüft, ob die Festschreibungen richtig sind,
- die Vorgänge werden um eine Anzahl wiederholt, die eine Funktion des gewünschten Sicherheitswertes ist.

2. Verfahren nach Anspruch 1, **dadurch gekennzeichnet, daß** der Vektor $s_j$ ein binärer Vektor ist.

3. Verfahren nach Anspruch 1 und 2, **dadurch gekennzeichnet, daß** nach der Wahl eines Zufallsvektors y und einer Zufallspermutation p die Identifikationseinheit folgendes berechnet:
$h_1 = H(p,My)$, $h_2 = H(y_p)$, $h_3 = H((y \text{ xor } s)_p)$ und liefert die Festschreibung $\{h_1, h_2, h_3\}$ zu der Verifikationseinheit, wobei $x_p$ den durch p und/oder die XOR-Funktion permutierten Vektor x darstellt, daß dann die Verifikationseinheit zufallsbedingt eine Zahl q wählt, wobei 0<q<4, und sie zu der Identifikationseinheit liefert und dann die Identifikationseinheit eine Antwort r berechnet und zu der Verifikationseinheit schickt, wobei r definiert ist durch:

wenn q=1 dann r={x,p}
wenn q=2 dann r={y xor s,p}
wenn q=3 dann r={$y_p,s_p$}
die Verifikationseinheit empfängt r={U,V} und prüft, ob:
wenn q=1 dann $h_1=H(V,MU)$ und $h_2=H(U_v)$
wenn q=2 dann $h_1=H(V,MU)XOR K)$ und $h_3=H(U_v)$
wenn q=3 dann $h_2=H(U)$ und $h_3=H(U \text{ xor } V)$, und das Hamming-Gewicht von V ist d,
wenn sich die Prüfung für q als richtig erweist, nimmt die Verifikationseinheit an, daß das Protokoll erfolgreich abgeschlossen ist.

4. Verfahren nach Anspruch 1 und 2, **dadurch gekennzeichnet, daß** nach der Wahl eines Zufallsvektors y und einer Zufallspermutation p die Identifikationseinheit $h_1 = H(p)$, $h_2 = H(y_p)$, $h_3 = H((y \text{ XOR } s)_p)$ berechnet und die Festschreibung $\{h_1,h_2,h_3\}$ zu dieser Verifikaitonseinheit liefert,

die Verifikationseinheit zufallsbedingt eine Liste von zueinander beabstandeten Zahlen G={$g_1,...g_t$} wählt, wobei 1 < $g_j$ < k ist, und zu der Identifikationseinheit sendet,
die Identifikationseinheit nur die f Bit von My berechnet, deren Lagen zu denen von G identisch sind, und zu der Verifikationseinheit den derart gewonnenen Vektor Z sendet,
die Verifikationseinheit zufallsbedingt eine Zahl q wählt, wobei 0 < q < 4 ist, und sie zu der Identifikationseinheit liefert, daß dann die Identifikationseinheit eine Antwort r berechnet und zu der Verifikationseinheit sendet, wobei r definiert ist durch:

wenn q = 1 dann r = {y,p}
wenn q = 2 dann r = {y XOR s, p}
wenn q = 3 dann r = {$y_p$, $s_p$}

die r = {U,V} Verifikationseinheit empfängt und prüft, ob:

Wenn q = 1 dann $h_1 = H(V)$, $h_2 = H(U_v)$ und Extrakt (MU,G) XOR Z = 0, wobei
Extrakt (x,G) den Projektionsvektor darstellt, der durch Wahl nur dem mit G bezeichneten Bit in x gewonnen wird,
wenn q = 2 dann $h_1 = H(V)$, $h_2 = H(U)$ und Extrakt (MU XOR K,G) XOR Z = 0 wenn q = 3 dann $h_2 = H(U)$, $h_3 = H(U\ XOR\ V)$ und das Hamming-Gewicht von V gleich d ist,
wenn sich die q betreffende Prüfung als richtig erweist, die Verifikationseinheit annimmt, daß das Protokoll erfolgreich abgeschlossen ist.

5. Verfahren nach Anspruch 1 und 2, **dadurch gekennzeichnet, daß** nach der Wahl eines Zufallsvektors y und einer Zufallspermutation p die Identifikationseinheit berechnet $h_1 = H(p)$, $h_2 = H(y_p)$, $h_3 = H((y\ XOR\ s)p)$ und die Festschreibung $\{h_1, h_2, h_3\}$ zu der Verifikationseinheit liefert,

die Identifikationseinheit Q = My berechnet und den derart gewonnenen Vektor Q zu der Verifikationseinheit liefert,
die Verifikationseinheit zufallsbedingt eine Liste von voneinander getrennten Zahlen G = $\{g_1,...g_t\}$ wählt, wobei $1 < g_j < k$ ist, und den Vektor Z = Extrakt (Q, G) berechnet,
die Verifikationseinheit zufallsmäßig eine Zahl q wählt, wobei 0 < q < 4 ist, und zu der Identifikationseinheit liefert, dann die Identifikationseinheit eine Antwort r berechnet und zu der Verifikationseinheit sendet, wobei r definiert ist durch:

wenn q = 1 dann r = {y,p}
wenn q = 2 dann r = {y XOR s, p}
wenn q = 3 dann r = $\{y_p, s_p\}$

die Verifikationseinheit r = {U, V} empfängt und prüft, ob:

wenn q = 1 dann $h_1 = H(V)$, $h_2 = H(U_v)$ und Extrakt (MU,G) XOR Z = 0,
wenn q = 2 dann $h_1 = H(V)$, $h_2 = H(U)$ und Extrakt (MU XOR K,G) XOR Z = 0,
wenn q = 3 dann $h_2 = H(U)$, $h_3 = H(U\ XOR\ V)$ und das Hamming-Gewicht von V gleich d ist,

wenn sich die q betreffende Prüfung als richtig erweist, die Verifikationseinheit annimmt, daß das Protokoll erfolgreich abgeschlossen ist.

6. Verfahren nach Anspruch 1, **dadurch gekennzeichnet, daß** der Vektor $s_j$ durch eine Anordnung von Vektoren s [1],...,s[w] ersetzt wird, die einen ausgedehnten Simplex-Code bilden.

7. Verfahren nach Anspruch 6, **dadurch gekennzeichnet, daß** der Vektor $K_j$ durch eine Anordnung von Vektoren K [1],...,K[w] ersetzt wird, wobei M(s[i])=K[i].

8. Verfahren nach Anspruch 6 und 7, **dadurch gekennzeichnet, daß** die Identifikationseinheit einen Zufallsvektor y und eine Zufallspermutation p wählt, dann $h_1=H(My, p)$, $h_2=H(y_p, s[1]_p,..., s[w]_p)$ berechnet und die Festschreibung $\{h_1, h_2\}$ zu der Verifikationseinheit liefert,

die Verifikationseinheit zufallsbedingt einen binären Vektor b[1],..., b[w] wählt und zu der Identifikationseinheit sendet,
die Identifikationseinheit eine Antwort z berechnet und zu der Verifikationseinrichtung sendet, wobei z definiert ist durch:

$$z = y_p\ XOR\ s[1]_p b[1]\ XOR\ s[2]_p b[2]\ XOR\ s[3]_p b[3]\ ...\ XOR\ s[w]_p b[w],$$

die Verifikationseinheit zufallsmäßig ein Bit q wählt und es zu der Identifikationseinheit sendet,
die Identifikationseinheit eine Antwort r sendet, die definiert ist durch:

wenn q = 0 dann r = $\{y_p, s[1]_p, ..., s[w]p\}$
wenn q = 1 dann r = {p},

die Verifikationseinheit eine Antwort r = {r[0], r[1],..., r[w]}, wenn q = 0 oder r = {r[0]} wenn q = 1, empfängt,
die Verifikationseinheit prüft, ob:

wenn q = 0 dann $h_2$= H(r), z = r[0] XOR r[1]b[1] XOR r[2]b[2] XOR r[3]b[3]...XOR r[w]b[w] und {r[1], r[2],..., r[w]} einen Simplex-Code bildet,
wenn q = 1 dann H(M(depermutiert(z, r[0])) XOR (K[1]b[1] XOR K[2]b[2] XOR K[3]b[3] ... XOR K[w]b[w]), r[0]) = $h_1$,
wenn die Prüfung für q sich als richtig erweist, die Verifikationseinheit annimmt, daß das Protokoll erfolgreich abgeschlossen ist.

9. Verfahren nach Anspruch 6 und 7, **dadurch gekennzeichnet, daß** die Identifkationseinheit einen Zufallsvektor y und eine Zufallspermutation p wählt und dann berechnet:

$h_1$ = H(p), $h_2$ = H($y_p$, $s[1]_p$,..., $s[w]_p$) und die Festschreibung {$h_1$, $h_2$} und
den Vektor $h_0$ = My zu der Verifikationseinheit liefert,

die Verifikationseinheit zufallsbedingt einen binären Vektor b[1],..., b[w] wählt und ihn zu der Identifikationseinheit sendet,
die Identifikationseinheit eine Antwort z berechnet und zu der Verifikationseinheit sendet, wobei z definiert ist durch:

$$z = y_p \text{ XOR } s[1]_p b[1] \text{ XOR } s[2]_p b[2] \text{ XOR } s[3]_p b[3] ... \text{ XOR } s[w]_p b[w],$$

die Verifikaitonseinheit zufallsbedingt ein Bit q wählt und es zu der Identifikationseinheit sendet,
die Identifikationseinheit eine Antwort r sendet, die definiert ist durch:

wenn q = 0 dann r = {yp, s[1]p, ..., s[w]}
wenn q = 1 dann r = {p},

die Verifikationseinheit eine Antwort r = {r[0], r[1],..., r[w]} empfängt, wenn q = 0 oder r = {r[0]} wenn q = 1,
die Verifikationseinheit prüft, ob:
wenn q = 0 dann $h_2$=H(r), z = r[0] XOR r[1]b[1] XOR r[2]b[2] XOR r[3]b[3]...XOR r[w]b[w] und {r[1], r[2],..., r[w]} einen Simplex-Code bilden,

wenn q = 1, dann $h_1$ = H(r[0]) und $(h0)_{r[0]}$ XOR (K[1]b[1] XOR K[2]b[2]
XOR K[3]b[3] ... XOR $K[w]b[w])_{r[0]}$ = z,

wenn die entsprechende Prüfung sich als richtig erweist, die Verifikationseinheit annimmt, daß das Protokoll erfolgreich abgeschlossen ist.

10. Verfahren nach einem der Ansprüche 1 bis 9, **dadurch gekennzeichnet, daß** das Protokoll t-mal wiederholt wird und daß die Verifikationseinheit die Identifikaitonseinheit nur dann authentifiziert, wenn alle Protokollvorgänge durch einen Erfolg abgeschlossen sind.

11. Verfahren nach Anspruch 10, **dadurch gekennzeichnet, daß** t so gewählt wird, daß 0 < t < 60 ist.

12. Verfahren nach einem der Ansprüche 1 bis 11, **dadurch gekennzeichnet, daß** das Hamming-Gewicht d derart gewählt ist, daß:
d = (k-n) $\log_2$ (1-(k/n)) - k $\log_2$ (k/n) und vorzugsweise deutlich unter diesem Wert.

13. Verfahren nach einem der Ansprüche 1 bis 11, **dadurch gekennzeichnet, daß** das Hamming-Gewicht d derart gewählt ist, daß:
d = (k-n) $\log_2$ (1-(k/n) - k $\log_2$ (k/n) und vorzugsweise deutlich größer als dieser Wert.

14. Verfahren nach einem der Ansprüche 12 und 13, **dadurch gekennzeichnet, daß** n = 2k ist.

15. Verfahren nach einem der Ansprüche 12 bis 14, **dadurch gekennzeichnet, daß** d = 0,11n oder d = 0,89n ist.

16. Verfahren nach einem der Ansprüche 1 bis 15, **dadurch gekennzeichnet, daß** n und k als Wert eines der folgenden Paare annehmen:

{n = 384, k = 196} oder {n = 512, k = 256} oder {n = 1024, k = 512} oder {n = 768, k = 384}.

**17.** Verfahren nach einem der Ansprüche 1 bis 16, **dadurch gekennzeichnet, daß** die Kontrollfunktion durch eine Chiffrierungsfunktion ersetzt ist, wo die Kontrollnachricht die Rolle des Schlüssels und/oder der zu chiffrierenden Nachricht spielt und wobei die Kontrolle der Richtigkeit der Kontrollnachricht darin besteht, die Nachricht, die kontrolliert worden ist, und/oder den Chiffrierungsschlüssel aufzudecken.

**18.** Verfahren nach einem der Ansprüche 1 bis 17, **dadurch gekennzeichnet, daß** es auf dem "Modular Knapsack" beruht und daß die Wahl des Vektors y und alle Berechnungen in Modulo m erfolgen und der XOR-Vorgang durch eine Addition oder eine Subtraktion Modulo m ersetzt wird, daß die Prüfungen für die Gewichte durch die Verifikation aller Koordinaten des Vektors, entweder 0 oder 1, ersetzt werden, und daß das Gewicht des Vektors konstant ist, wobei die n, k und m verbindende Gleichung folgendermaßen ist: $n \simeq k \ln(m)/\ln 2$ und $n - k < 64$.

**19.** Verfahren nach Anspruch 18, **dadurch gekennzeichnet, daß** m unter den Zahlen 2, 3, 5, 7 oder $2^c$ gewählt wird, wobei c eine kleine ganze Zahl ist.

**20.** Verfahren nach Anspruch 18 oder 19, **dadurch gekennzeichnet, daß** {n, k, m} als Werte einen der folgenden Werte annimmt: {196, 128, 3} oder {384, 256, 3} oder {128, 64, 5} oder {192, 96, 5}.

**21.** Verfahren nach einem der Ansprüche 1 bis 20, **dadurch gekennzeichnet, daß** die Berechnung von H(p) durch die Berechnung von $H(e_p)$ erfolgt, wobei e ein konstanter, Pseudozufalls-Vektor ist.

**22.** Verfahren nach einem der Ansprüche 1 bis 21, **dadurch gekennzeichnet, daß,** um die Identität ID jedes Benutzers seinen Schlüsseln {sj, Kj} zuordnen zu können, die Obrigkeit oder Behörde eine Anordnung von geheimen primären Schlüsseln {KPj} wählt und ID in einen binären Vektor I = H(ID) umsetzt, der zur Berechnung von s; als Funktion von $KP_i$ dient, und die Obrigkeit die Anordnung der öffentlichen primären Schlüssel {$PP_i$} veröffentlicht, wobei {$PP_i$} = f ($KP_i$) ist.

**23.** Verfahren nach Anspruch 22, **dadurch gekennzeichnet, daß** die Obrigkeit die Bit von I als Indikatoren für die Auswahl verwendet, die es ermöglichen, für jedes $KP_i$ zu entscheiden, ob dieses in den Berechnungsvorgang von s eingeht oder nicht.

**24.** Verfahren nach Anspruch 23, **dadurch gekennzeichnet, daß** die Anordnung {$KP_i$} ein oder mehrere ausgedehnte Simplex-Codes bildet.

**25.** Verfahren nach Anspruch 24, **dadurch gekennzeichnet, daß** I eine Zahl mit 56 Bit ist.

**26.** Verfahren nach Anspruch 22 bis 25, **dadurch gekennzeichnet, daß** s als lineare Kombination von $KP_i$ berechnet wird, wobei
S = I [1] $KP_1$ + I [2] $KP_2$ + ... I [Größe von I ] $K_p$ Größe von I und wobei $PP_i$ = ($KP_i$).

**27.** Verfahren zur Verknüpfung von ID mit s nach den Ansprüchen 22, 23 und 25, **gekennzeichnet durch** die folgenden Berechnungen:

- die Obrigkeit wählt t Geheimschlüssel $KP_i$ mit einem Gewicht at, deren Bit mit 1 auf 2at-Lagen aufgeteilt sind, veröffentlicht die Anordnung der $PP_i=M(KP_i)$ und erzeugt einen Schlüssel s **durch** teilweise Triangulation in der folgenden Weise:

$$s = \sum_{i = I}^{t} x[i] \, KP_i$$

$$Ms = \sum_{i=1}^{t} I[i]\, PP_i$$

und

das Gewicht von s ist = ta-t/2,
die Wahl der Abmessungen ist dabei **durch** die folgenden Gleichungen bestimmt:
0,11 n = ta-t/2, 2k = n und 2at8 > 56 wobei 2a-2aH2(8) ≃ 1.

**28.** Verfahren nach Anspruch 27, **dadurch gekennzeichnet, daß** t = 56, d = 95, n = 864, k = 432.

**29.** Identifikationseinheit zur Durchführung des Verfahrens nach einem der Ansprüche 1 bis 28, **dadurch gekennzeichnet, daß** sie wenigstens Mittel zum Multiplizieren einer Matrix M mit den Abmessungen n x k mit Vektoren mit n Bit, Mittel zum Speichern eines Geheimschlüssels $s_j$ mit einem Hamming-Gewicht d, Mittel zum Erzeugen eines Zufallsvektors y und einer Zufallspermutation p, Mittel zur Bildung einer Kontroll-Verschlüsselung H und Mittel zur Kommunikation mit der Verifikationseinheit enthält.

**30.** Verifikationseinheit zur Durchführung des Verfahrens nach einem der Ansprüche 1 bis 28, **dadurch gekennzeichnet, daß** sie wenigstens Mittel zum Multiplizieren einer Matrix M mit den Abmessungen n x k mit Vektoren mit n Bit, Mittel zum Speichern von wenigstens eines öffentlichen Vektors $K_i$, wobei $K_i = Ms_i$ ist, Mittel zur Zufallserzeugung einer ganzen Zahl, Mittel zum Bilden einer Kontroll-Verschlüsselung H und Mittel zur Kommunikation mit den Identifikationseinheiten enthält.

**31.** Einheit nach Anspruch 29 und 30, **dadurch gekennzeichnet, daß** die Matrix M durch einen deterministischen Generator für Pseudozufalls-Zahlen erzeugt wird.

**32.** Einheit nach Anspruch 29 bis 31, **dadurch gekennzeichnet, daß** der Matrix-Multiplizierer M durch eine Anordnung von "UND"-Gattern gebildet ist, wobei den Eingängen jedes Gatters ein Vektorbit y und ein Bit der laufenden Leitung der Matrix M zugeführt wird und wobei die Ausgänge der "UND"-Gatter ein dreiseitiges Netz von "XOR"-Gattern bilden, um an dem Ausgang der Schaltung das Bit zu gewinnen, das dem Skalaprodukt von y mit der laufenden Leitung der Matrix M entspricht.

**Claims**

**1.** Authentication process for at least one identification device using a verification device, this authentication being made by a zero knowledge input protocol **characterized in that** the zero knowledge input protocol is based on the decoding by syndrome problem or the problem known as "Modular Knapsack", and comprises the following steps:

- in order to allow dialog between the identification device and the verification device, establish a secret key composed of at least one vector $s_i$ of dimension n and Hamming weight d (d<n) and a public key containing a matrix M with dimensions n x k, whose coefficients are chosen at random, and at least one vector $K_i$ such that $K_i = Ms_i$;

- in the identification device, produce a random vector y with dimension n and a random permutation p and send a commitment to the verification device obtained by applying a cryptographic hash function H on parameters as a function of y, p, s and M;

- then, as a function of a random number selected by the verification device and sent to the identification device, reveal some elements as a function of y, p and $s_i$ to the identification device, but without revealing $s_i$;

- and as a function of the random number, test if the commitments are correct on the verification device using received elements and the public key;

- repeat the operations several times depending on the required security level.

2. Process according to claim 1, **characterized in that** the vector $s_i$ is a binary vector.

3. Process according to claims 1 and 2, **characterized in that** after choosing a random vector y and a random permutation p, the identification device calculates:

$h_1 = H(p,My)$, $h_2 = H(y_p)$, $h_3 = H((y$ XOR $s)p)$ and sends the commitment $\{h_1, h_2, h_3\}$ to the verification device (where $x_p$ represents the vector x permuted by p and XOR represents the exclusive OR function), then the verification device selects a number q such as $0 < q < 4$ at random and sends it to the identification device, and the identification device then calculates and sends a reply defined as follows to the verification device:

if q = 1 then $r = \{y,p\}$,

if q = 2 then $r = \{y$ XOR $s, p\}$,

if q = 3 then $r = \{y_p, s_p\}$;

the verification device receives $r = \{U,V\}$ and tests that:

if q = 1 then $h_1 = H(V,MU)$ and $h_2 = H(U_V)$,

if q = 2 then $h_1 = H(V, MU$ XOR $K)$ and $h_3 = H(U_V)$,

if q = 3 then $h_2 = H(U)$, $h_3 = H(U$ XOR $V)$ and the Hamming weight of V is d.

If the test corresponding to q is satisfied, the verification device considers that the protocol terminated successfully.

4. Process according to claims 1 and 2, **characterized in that** after choosing a random vector y and a random permutation p:

the identification device calculates $h_1 = H(p)$, $h_2 = H(yp)$, $h_3 = H((y$ XOR $s)p)$ and sends the commitment $\{h_1, h_2, h_3\}$ to this verification device;

the verification device selects a list of mutually discontinuous numbers $G = \{g_1, ...g_f\}$ at random such that $1 < g_i < k$ and sends it to the identification device;

the identification device calculates only the f bits of My at locations indicated by G and sends the vector z thus obtained to the verification device;

the verification device selects a number q such as $0 < q < 4$ at random and sends it to the identification device, and the identification device calculates and sends a reply r defined as follows to the verification device:

if q = 1 then $r = \{y,p\}$,

if q = 2 then $r = \{y$ XOR $s, p\}$,

if q = 3 then $r = \{y_p, s_p\}$;

the verification device receives $r = \{U,V\}$ and checks that:

if q = 1 then $h_1 = H(V)$, $h_2 = H(U_V)$ and Extract(MU,G) XOR $Z = 0$ where Extract(x, G) represents the projection vector obtained by choosing in x only the bits indicated by G,

if q = 2 then $h_1$ = H(V), $h_3$ = H($U_V$) and Extract(MU XOR K,G) XOR Z=0,

if q = 3 then $h_2$ = H(U), $h_3$ = H(U XOR V) and the Hamming weight of V is d;

If the test corresponding to q is satisfied, the verification device considers that the protocol terminated successfully.

5. Process according to claim 1, **characterized in that** after choosing a random vector y and a random permutation p, the identification device calculates $h_1$ = H(p), $h_2$ = H(yp), $h_3$ = H ((y XOR s)p) and sends the commitment {$h_1$, $h_2$, $h_3$} to the verification device;

the identification device calculates Q = My and sends the vector Q thus obtained to the verification device;

the verification device selects a random list of mutually discontinuous numbers G = {$g_1$, ..., $g_f$} such that 1 < $g_i$ < k and calculates the vector Z = Extract(Q,G).

The verification device selects at random a number q such as 0 < q < 4 and sends it to the identification device, the identification device then calculates and sends a reply r defined as follows to the verification device:

if q = 1 then r={y,p},

if q = 2 then r = {y XOR s, p},

if q = 3 then r = {$y_p$, $s_p$};

the verification device receives r = {U,V} and checks that:

if q = 1 then $h_1$ = H(V), $h_2$ = H($U_V$) and Extract(MUG) XOR Z = 0,

if q = 2 then $h_1$ = H(V), $h_3$ = H($U_V$) and Extract(MU XOR K,G) XOR Z=0,

if q = 3 then $h_2$ = H(U), $h_3$ = H(U XOR V) and the Hamming weight of V is d;

If the test corresponding to q is satisfied, the verification device considers that the protocol terminated successfully.

6. Process according to claim 1, **characterized in that** the vector $s_i$ is replaced by a set of vectors s[1], ..., s[w] forming an extended simplex code.

7. Process according to claims 6, **characterized in that** the vector $K_i$ is replaced by a set of vectors K[1], ... K[w] such that M(s[i]) = K[i].

8. Process according to claims 6 and 7, **characterized in that** the identification device chooses a random vector y and a random permutation p and then calculates $h_1$ = H(My, p), $h_2$ = H(yp, s[1]$_p$, ..., s[w]$_p$) and sends the commitment {$h_1$, $h_2$} to the verification device;

the verification device selects a binary vector b[1], ..., b[w] at random and sends it to the identification device;

the identification device calculates and sends a response z defined as follows to the verification device:

z = $y_p$ XOR s[1]$_p$b[1] XOR s[2]$_p$b[2] XOR s[3]$_p$b3] ... XOR s[w]$_p$b[w];

the verification device selects a bit q at random and sends it to the identification device;

the identification device sends a response r defined by:

if q = 0 then r = {yp, s[1]$_p$, ..., s[w]p},

if q = 1 then r = {p};

the verification device receives a response r = {r[0], r[1], ..., r[w]} if q = 0 or r = {r[0]} if q = 1;

the verification device tests that:

if q = 0 then $h_2$ = H(r),z = r[0] XOR r[1]b[1] XOR r[2]b[2] XOR r[3]b[3] ... XOR r[w]b[w] and {r[1], r[2], ..., r[w]} forms a simplex code,

if q = 1 then H(M(depermute(z, r[0]))) XOR (K[1]b[1] XOR K[2]b[2] XOR K[3]b[3] ... XOR K[w]b[w]), r[0] )= $h_1$.

If the test corresponding to q is satisfied, the verification device considers that the protocol terminated successfully.

**9.** Process according to claims 6 and 7, **characterized in that** the identification device chooses a random vector y and a random permutation p and then calculates:

$h_1$ = H(p), $h_2$ = H(yp, s[1]$_p$, ..., s[w]$_p$) and sends the commitment {$h_1$, $h_2$} and the vector $h_0$ = My to the verification device;

the verification device selects a binary vector b[1], ..., b[w] at random and sends it to the identification device,

the identification device calculates and sends a response z defined as follows to the verification device:

z = $y_p$ XOR s[1]$_p$b[1] XOR s[2]$_p$b[2] XOR s[3]$_p$b[3] ... XOR s[w]$_p$b[w];

the verification device selects a bit q at random and sends it to the identification device,

the identification device sends a response r defined by:

if q = 0 then r = {$y_p$, s[1]$_p$, ..., s[w]$_p$},

if q = 1 then r = {p};

the verification device receives a reply r = {r[0], r[1], ..., r[w]} if q = 0 or r = {r[0]} if q = 1;

the verification device tests that:

if q = 0 then $h_2$ = H(r),z = r[0] XOR r[1]b[1] XOR r[2]b[2] XOR r[3]b[3] ... XOR r[w]b[w] and {r[1], r[2], ... r[w]} forms a simplex code,

if q = 1 then $h_1$ = H(r[0]) and ($h_0$)$_{r[0]}$ XOR (K[1]b[1] XOR K[2]b[2] XOR K[3]b[3] ... XOR K[w]b[w])$_{r[0]}$ = z.

If the corresponding test is satisfied, the verification device considers that the protocol terminated successfully.

**10.** Process according to any of claims 1 to 9, **characterized in that** the protocol is repeated t times and the verification device only authenticates the identification device if all sessions of the protocol terminated successfully.

**11.** Process according to claim 10, **characterized in that** t is chosen such that 0<t<60.

**12.** Process according to any of the claims 1 to 11, **characterized in that** the Hamming weight d is chosen such that: d = (k - n) log $_2$ (1 - (k/n)) - k log$_2$ (k/n), and preferably much lower than this value.

**13.** Process according to any of the claims 1 to 11, **characterized in that** the Hamming weight d is chosen such that: d = (k - n) log $_2$ (1 - (k/n)) - k log$_2$ (k/n), and preferably much greater than this value.

**14.** Process according to any of claims 12 and 13, **characterized in that** n = 2 k.

**15.** Process according to any of claims 12 to 14, **characterized in that** d= 0.11n or d = 0.89 n

**16.** Process according to any of the claims 1 to 15, **characterized in that** the values of n and k are equal to one of the following pairs:
{n = 384, k = 196} or {n = 512, k = 256} or {n = 1024, k = 512} or {n = 768, k = 384}

**17.** Process according to any of the claims 1 to 16, **characterized in that** the hash function is replaced by an encryption function where the message to be hashed acts as the code and/or the message to be encrypted and in which the check on the truth of the hashed method consists of unmasking the message that was hashed and/or the encryption key

**18.** Process according to any of the claims 1 to 17, **characterized in that** it is based on the "Modular Knapsack" and **in that** the choice of the vector y and all calculations are performed in modulo m and the XOR operation is replaced by a modulo m addition or subtraction, tests on the weight being replaced by a check that all coordinates of the vector r are equal to 0 or 1, and that the weight of this vector is constant, the relation between n, k and m being: $n \cong k \ln(m)/\ln 2$ and n -k >64.

**19.** Process according to claim 18, **characterized in that** m is chosen from the numbers 2, 3, 5, 7 or $2^c$ where c is a small integer number.

**20.** Process according to claims 18 or 19, **characterized in that** the values of {n,k,m} are one of the following: {196, 128, 3} or {384, 256, 3} or {128, 64, 5} or {192, 96, 5}.

**21.** Process according to any of the claims 1 to 20, **characterized in that** H(p) is calculated by calculating H(ep) where e is a pseudo-random constant vector.

**22.** Process according to any of the claims 1 to 21, **characterized in that** the generating authority chooses a set of primary secret codes $\{KP_i\}$, and hashes ID into a binary vector I = H(ID) used to calculate $s_i$ as a function of $KP_i$ values, in order to be able to associate the ID of each User with his codes $\{s_i, K_i\}$, the authority publishing all public keys $\{PP_i\}$ or $\{PP_i\} = f (KP_i)$.

**23.** Process according to claim 22, **characterized in that** the authority uses bits equal to 1 as selection indicators in order to decide whether or not each $KP_i$ is involved in the calculation of s.

**24.** Process according to claim 23, **characterized in that** the set $\{KP_i\}$ forms one or several extended simplex codes.

**25.** Process according to claim 24, **characterized in that** I is a 56-bit number.

**26.** Process according to claims 22 to 25, **characterized in that** s is calculated as a linear combination of $KP_i$ values, namely
s = I [1] $KP_1$ + I [2] $KP_2$ + ... I [size of I] Kp size of I and where $PP_i$ = $(KP_i)$.

**27.** Process to relate ID to s according to claims 22, 23 and 25, **characterized in that** the following calculations are carried out:

- the authority selects t secrets $KP_i$ with weight at in which bits equal to 1 are distributed on 2at positions, publishes all $PP_i = M(KP_i)$ values and generates a code s by partial triangulation as follows:

$$s = \sum_{i = I}^{t} x[i] \, KP_i$$

$$Ms = \sum_{i=1}^{t} I(i)\, PP_i$$

and

the weight of s = ta-t/2,

the choice of dimensions being governed by the following relations: $0,11\, n = ta-t/2$, $2k = n$ and $2at\delta > 56$ where $2a-2aH_2(\delta) \cong 1$.

28. Process according to claim 27, **characterized in that** $t = 56$, $d = 95$, $n = 864$, $k = 432$.

29. An identification device for embodiment of the process according to any of the claims 1 to 28, **characterized in that** it comprises at least means to multiply a matrix M of dimensions n x k, by vectors of n bits, means to store a secret vector $s_i$ with a Hamming weight d, means to produce a random vector y and random permutation p, means to perform cryptographic hashing H and means of communication with the verification device.

30. Verification device for embodiment of the process according to any of the claims 1 to 28, **characterized in that** it comprises at least means to multiply matrix M of dimensions n x k, by n-bit vectors, means to store at least one public vector $K_i$ such that $K_i = Ms_i$, means to produce a random integer number, means to do a cryptographic hashing H and means of communication with identification devices.

31. Device according to claims 29 and 30, **characterized in that** the matrix M is generated by a deterministic pseudo-random number generator.

32. Device according to claims 29 to 31, **characterized in that** the matrix multiplier M is formed of an alignment of AND gates, a bit from vector y and a bit from the current line of the matrix M being applied to the inputs of each of these gates, and wherein the outputs of the AND are applied to a triangular network of XOR gates in order to obtain the bit corresponding to the scalar product of y and the current line of matrix M at the circuit output.

Dispositif d'identification

Clé secrète = vecteur s

Produire un vecteur binaire aléatoire y

Produire une permutation aléatoire p

Calculer $h_1$ = H(p, My)

$h_2$ = H($y_p$)

$h_3$ = H((yⴲs)$_p$)

Envoyer {$h_1$, $h_2$, $h_3$} ⟶

Recevoir q ⟵

Si q = 1 alors r = {y, p}
Si q = 2 alors r = {yⴲs, p}
Si q = 3 alors r = {$y_p$, $s_p$}

Envoyer r ⟶

INTERFACE DE COMMUNICATION ENTRE LES DEUX DISPOSITIFS

Dispositif de vérification

Clé Publique = vecteur k

Produire un nombre aléatoire q ∈ {1,2,3}

⟶ Recevoir {$h_1$, $h_2$, $h_3$}

Envoyer q

⟶ Recevoir r

Si q = 1 vérifier : $h_1$ $h_2$

Si q = 2 vérifier : $h_1$, $h_3$

Si q = 3 vérifier : $h_2$, $h_3$ et le poids de Hamming de $s_p$

test OK? ⟶ oui ⟶ Dispositif accepté

Dispositif rejeté

INTERFACE E/S DU SYSTEME PROTEGE

# FIG.1

| Dispositif d'identification | | Dispositif de vérification |
|---|---|---|
| Clé secrète = w vecteurs $\{s_i\}$ | I N T E R F A C E | Clé Publique = w vecteurs $\{K_i\}$ |

**Dispositif d'identification**

Produire un vecteur binaire aléatoire y

Produire une permutation aléatoire p

Calculer $h_1 = H(p, My)$

$h_2 = H(y_p)$

Envoyer $\{h_1, h_2\}$ ———————→

Recevoir b ←———————

Envoyer $z = \left( y \bullet \sum b_i s_i \right)_p$ ———→

Recevoir q ←———————

Si q=0 alors $r = \{y_p, s_{1_p}, \ldots s_{w_p}\}$

Si q=1 alors $r = p$

Envoyer r ———————

**INTERFACE DE COMMUNICATION ENTRE LES DEUX DISPOSITIFS**

**Dispositif de vérification**

Produire un bit aléatoire q
Produire un vecteur binaire aléatoire de longueur w.

→ Recevoir $\{h_1, h_2\}$

——— Envoyer b

→ Recevoir z

——— Envoyer q

→ Recevoir r

Si q = 1 vérifier : $h_1$

Si q = 0 vérifier : $h_2$ et tester que l'ensemble de de vecteurs $s_{1_p}, \ldots, s_{w_p}$ est un code simplexe

test OK? —oui→ Dispositif accepté

Dispositif rejeté

INTERFACE E/S DU SYSTEME PROTEGE

# FIG.2

# FIG.3

EP 0 605 289 B1

FIG.4

EP 0 605 289 B1

entrée y de 0 à 3      entrée y de 4 à 7

entrée M de 0 à 3      S      entrée M de 4 à 7

# FIG.5